# EUROPEAN PATENT APPLICATION

(11) **EP 2 261 427 A1**
(43) Date of publication of application: **15.12.2010**
(21) Application number: 10165339.2
(22) Date of filing: 09.06.2010
(51) Int. Cl.: E02F 9/22, B66C 13/18, B66F 9/20, F16H 61/40, B60W 10/10, E02F 9/20, E02F 9/12

(54) **Hydraulic work vehicle**

(30) Priority: 10.06.2009 JP 2009139472
(71) Applicant: Kabushiki Kaisha Kobe Seiko Sho (Kobe Steel, Ltd.), Kobe-shi, Hyogo 651-8585 (JP); Kobelco Cranes Co., Ltd., Tokyo 141-8626 (JP)
(72) Inventor: Sugano, Naoki, Kobe-shi Hyogo 651-2271 (JP); Hori, Naoto, Kobe-shi Hyogo 651-2271 (JP); Kobayashi, Takahiro, Akashi-shi Hyogo 674-0063 (JP)
(74) Representative: TBK-Patent

(57) **Abstract**

The hydraulic work vehicle of the present invention includes: an engine (2); wheels (6); a first work device capable of performing predetermined work; a hydraulic pump (10) that is driven by the engine (2) and discharges hydraulic oil; a wheel drive unit (12) that is driven by hydraulic pressure of hydraulic oil supplied from the hydraulic pump (10) to rotate the wheel (6); a closed circuit (14) that connects the hydraulic pump (10) and the wheel drive unit (12) and circulates hydraulic oil between the hydraulic pump (10) and the wheel drive unit (12); a work device drive circuit (18) that includes a hydraulic driving member (52) for driving the first work device and is branched from the closed circuit (14) so that hydraulic oil for driving the hydraulic driving member (52) can flow in the work device drive circuit (18) from the closed circuit (14); a wheel drive unit switching unit (20) that is provided to the wheel drive unit (12) and capable of switching the wheel drive unit (12) between a wheel driving state and a wheel non-driving state; a hydraulic driving member switching unit (22) that is provided to the work device drive circuit (18) and capable of switching the hydraulic driving member (52) between a work device driving state and a work device non-driving state; and a control unit (28) for controlling the wheel drive unit switching unit (20) to cause the wheel drive unit (12) to be in the wheel driving state and controlling the hydraulic driving member switching unit (22) to cause the hydraulic driving member (52) to be in the work device non-driving state when the hydraulic work vehicle is in a traveling state, and controlling the wheel drive unit switching unit (20) to cause the wheel drive unit (12) to be in the wheel non-driving state and controlling the hydraulic driving member switching unit (22) to cause the hydraulic driving member (52) to be in the work device driving state when the first work device is driven.

## Description

The present invention relates to a hydraulic work vehicle.

A hydraulic work vehicle using so-called HST (Hydro Static Transmission) is conventionally known. HST is a drive system that obtains the required power by an engine driving a hydraulic pump and a hydraulic motor being driven with the hydraulic pressure supplied from the hydraulic pump. A wheel crane, a wheel excavator and the like are examples of a hydraulic work vehicle using the foregoing HST. Among the foregoing work vehicles, there are work vehicles that separately comprise a work-related hydraulic pump for driving a hydraulic-type work device such as a crane or a shovel, and a travel-related hydraulic pump for driving a travel-related hydraulic motor that rotates wheels when the work vehicle is in a traveling state. With this kind of work vehicle, the work-related hydraulic pump and the travel-related hydraulic pump are connected to an engine via a power divider. Consequently, the driving force of the engine is distributed to both hydraulic pumps with the power divider, and both hydraulic pumps are respectively driven thereby.

Nevertheless, with this kind of work vehicle, even when it is only necessary to drive the work vehicle and it is not necessary to drive the work device, the driving force of the engine is transmitted to both the travel-related hydraulic pump and the work-related hydraulic pump, and both hydraulic pumps are driven. In other words, even in cases where it is only necessary to drive the work vehicle and it is not necessary to drive the work device, the work-related hydraulic pump is idled and the engine has no choice but to generate extra driving force for driving the work-related hydraulic pump even when it does not need to be driven. Consequently, there is a problem in that the fuel consumption when the work vehicle is in a traveling state will deteriorate.

Thus, Japanese Patent Application Laid-open No. H5-322040 proposes a structure of a hydraulic work vehicle that is able to overcome the foregoing problem. With this proposed structure, a switching control valve is provided to a supply/discharge pipe of hydraulic oil connecting the travel-related hydraulic pump and the travel-related hydraulic motor, and the switching control valve and a hydraulic driving member of the work device are connected via piping. The supply destination of the hydraulic oil is switched with the switching control valve so that the hydraulic oil that is discharged from the travel-related hydraulic pump is supplied to the travel-related hydraulic motor when the work vehicle is in a traveling state, and the hydraulic oil that is discharged from the travel-related hydraulic pump is supplied to the hydraulic driving member of the work device when the work device is driven. Specifically, the hydraulic work vehicle that is proposed in Japanese Patent Application Laid-open No. H5-322040 is not provided with a work-related hydraulic pump that is to be used exclusively for driving the work device since a single travel-related hydraulic pump is able to supply the hydraulic oil to the travel-related hydraulic motor when the work vehicle is in a traveling state and supply the hydraulic oil to the hydraulic driving member when the work device is driven. Thus, this hydraulic work vehicle is able to prevent the deterioration of fuel consumption caused by the idling of the work-related hydraulic pump when the work vehicle is in a traveling state.

Nevertheless, with the hydraulic work vehicle proposed in Japanese Patent Application Laid-open No. H5-322040, when the hydraulic oil flows between the travel-related hydraulic pump and the travel-related hydraulic motor by passing through the supply/discharge pipe when the work vehicle is in a traveling state, the hydraulic oil will pass through the switching control valve. Since pressure loss will occur when the hydraulic oil passes through the switching control valve, there is a possibility that the fuel consumption when the work vehicle is in a traveling state will deteriorate due to such pressure loss.

Thus, an object of this invention is to prevent the deterioration of fuel consumption in a hydraulic work vehicle when the work vehicle is in a traveling state while enabling the work vehicle to travel based on hydraulic pressure and the work device to be hydraulically driven.

The hydraulic work vehicle according to one aspect of the present invention includes an engine, wheels, a first work device capable of performing predetermined work, a hydraulic pump that is driven by the engine and discharges hydraulic oil, a wheel drive unit that is driven by hydraulic pressure of hydraulic oil supplied from the hydraulic pump to rotate the wheel, a closed circuit that connects the hydraulic pump and the wheel drive unit and circulates hydraulic oil between the hydraulic pump and the wheel drive unit, a work device drive circuit that includes a hydraulic driving member for driving the first work device and is branched from the closed circuit so that hydraulic oil for driving the hydraulic driving member can flow in the work device drive circuit from the closed circuit, a wheel drive unit switching unit that is provided to the wheel drive unit and capable of switching the wheel drive unit between a wheel driving state and a wheel non-driving state, a hydraulic driving member switching unit that is provided to the work device drive circuit and capable of switching the hydraulic driving member between a work device driving state and a work device non-driving state, and a control unit for controlling the wheel drive unit switching unit to cause the wheel drive unit to be in the wheel driving state and controlling the hydraulic driving member switching unit to cause the hydraulic driving member to be in the work device non-driving state when the hydraulic work vehicle is in a traveling state, and controlling the wheel drive unit switching unit to cause the wheel drive unit to be in the wheel non-driving state and controlling the hydraulic driving member switching unit to cause the hydraulic driving member to be in the work device driving state when the first work device is driven.
Fig. 1 is a diagram showing a drive system of the hydraulic work vehicle according to the first embodiment of the present invention;
Fig. 2 is a correlation diagram showing the relation of the discharge pressure of the pump and the pump capacity in the hydraulic work vehicle according to the first embodiment;
Fig. 3 is a correlation diagram showing the relation of the manipulated variable of the operating level and the pump capacity in the hydraulic work vehicle according to the first embodiment;
Fig. 4 is a diagram showing a drive system of the hydraulic work vehicle according to a comparative example of the first embodiment of the present invention;
Fig. 5 is a diagram showing a drive system of the hydraulic work vehicle according to the second embodiment of the present invention;
Fig. 6 is a diagram showing a drive system of the hydraulic work vehicle according to the third embodiment of the present invention;
Fig. 7 is a diagram showing a drive system of the hydraulic work vehicle according to the fourth embodiment of the present invention;
Fig. 8 is a diagram showing a drive system of the hydraulic work vehicle according to the fifth embodiment of the present invention;
Fig. 9 is a diagram showing a drive system of the hydraulic work vehicle according to the sixth embodiment of the present invention;
Fig. 10 is a diagram showing a drive system of the hydraulic work vehicle of a comparative example of the sixth embodiment of the present invention; and
Fig. 11 is a diagram showing a drive system of the hydraulic work vehicle according to the seventh embodiment of the present invention.

Embodiments of the present invention are now explained with reference to the attached drawings.

### (First Embodiment)

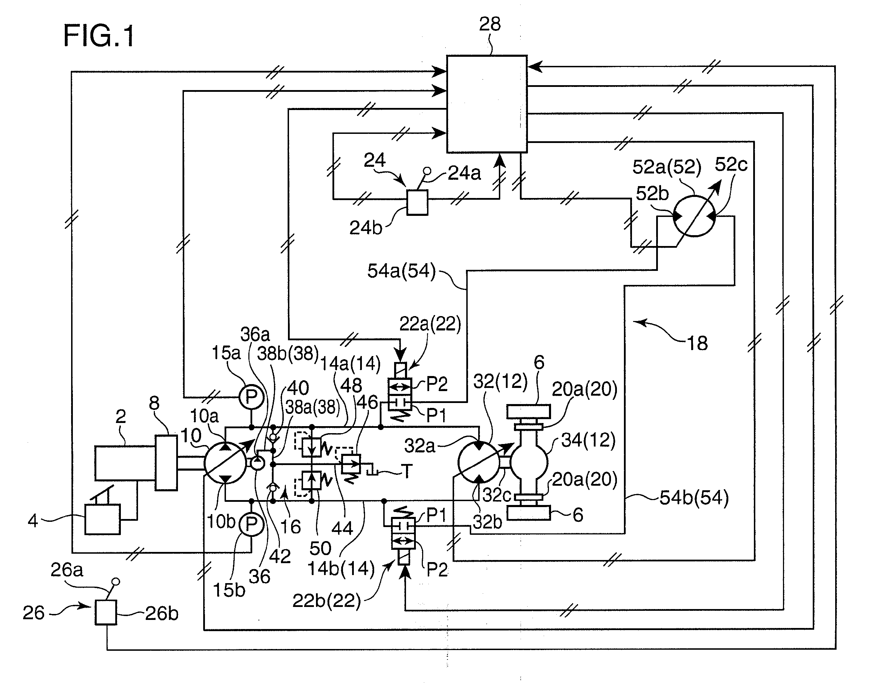

The configuration of the hydraulic work vehicle according to the first embodiment of the present invention is foremost explained with reference to Fig. 1.

The hydraulic work vehicle according to the first embodiment uses an HST travel system. Specifically, with this hydraulic work vehicle, a hydraulic pump 10 is driven with an engine 2, a travel-related hydraulic motor 32 is driven with the hydraulic pressure supplied from the hydraulic pump 10, and wheels 6 are rotated with the driving force of the travel motor 32 in order to cause the hydraulic work vehicle to travel. Moreover, with this hydraulic work vehicle, a work-related hydraulic motor 52a as a hydraulic driving member 52 is driven with the hydraulic pressure supplied from the hydraulic pump 10 to operate the work device.

Specifically, the hydraulic work vehicle according to the first embodiment includes an engine 2, an acceleration device 4, wheels 6, a power divider 8, a hydraulic pump 10, a wheel drive unit 12, a closed circuit 14, a charge circuit 16, a work device (not shown), a work device drive circuit 18, a wheel drive unit switching unit 20, a hydraulic driving member switching unit 22, an operating device 24, a travel mode switching device 26, and a controller 28.

The hydraulic pump 10 and a charge pump 36 described later of the charge circuit 16 are connected to the engine 2 via the power divider 8. The driving force of the engine 2 is thereby distributed to the hydraulic pump 10 and the charge pump 36 by the power divider 8.

The acceleration device 4 is connected to the engine 2, and operated by an operator. The acceleration device 4 increases and decreases the rotational frequency of the engine 2 according to the increase or decrease of the manipulated variable by the operator.

The hydraulic pump 10 is a variable displacement-type and also a two-way discharge-type hydraulic pump. The hydraulic pump 10 includes an inlet/outlet 10a of one side and an inlet/outlet 10b of another side. The hydraulic pump 10 discharges hydraulic oil from the inlet/outlet 10a of one side or the inlet/outlet 10b of the other side as a result of receiving the driving force from the engine 2 via the power divider 8.

The wheel drive unit 12 is operated by the hydraulic pressure of the hydraulic oil supplied from the hydraulic pump 10 and rotates the wheels 6. The wheel drive unit 12 includes a travel-related hydraulic motor 32 and an axle device 34.

The travel-related hydraulic motor 32 is a variable displacement-type hydraulic motor. In the ensuing explanation, the travel-related hydraulic motor 32 is simply referred to as a travel motor 32. The travel motor 32 is operated by being supplied with hydraulic oil, and generates driving force for rotating the wheels 6. The travel motor 32 includes an inlet/outlet 32a of one side and an inlet/outlet 32b of another side.

The axle device 34 transmits the driving force of the travel motor 32 to the wheels 6. An output shaft 32c of the travel motor 32 is connected to the axle device 34. The driving force of the travel motor 32 is input into the axle device 34 through the output shaft 32c. The axle device 34 includes an axle (not shown) extending in the width direction of the work vehicle. The wheels 6 are respectively mounted on either end of the axle. With the axle device 34, the axle is rotated as a result of the driving force of the travel motor 32 being input. The wheels 6 are rotated pursuant to the rotation of the axle.

The closed circuit 14 connects the hydraulic pump 10 and the travel motor 32 of the wheel drive unit 12. The closed circuit 14 is used for circulating the hydraulic oil between the hydraulic pump 10 and the travel motor 32. In other words, the hydraulic oil is circulated between the hydraulic pump 10 and the travel motor 32 through the closed circuit 14. Specifically, the closed circuit 14 is configured from a pair of supply/discharge passages 14a, 14b. One supply/discharge passage 14a mutually connects the inlet/outlet 10a of one side of the hydraulic pump 10 and the inlet/outlet 32a of one side of the travel motor 32. The other supply/discharge passage 14b mutually connects the inlet/outlet 10b of the other side of the hydraulic pump 10 and the inlet/outlet 32b of the other side of the travel motor 32. Consequently, when the hydraulic oil is discharged from the inlet/outlet 10a of one side of the hydraulic pump 10, the discharged hydraulic oil flows into the inlet/outlet 32a of one side of the travel motor 32 through the one supply/discharge passage 14a, and is thereafter returned from the inlet/outlet 32b of the other side of the travel motor 32 to the inlet/outlet 10b of the other side of the hydraulic pump 10 through the other supply/discharge passage 14b. Moreover, if the hydraulic oil is discharged from the inlet/outlet 10b of the other side of the hydraulic pump 10, the discharged hydraulic oil flows into the inlet/outlet 32b of the other side of the travel motor 32 through the other supply/discharge passage 14b, and is thereafter returned from the inlet/outlet 32a of one side of the travel motor 32 to the inlet/outlet 10a of one side of the hydraulic pump 10 through the one supply/discharge passage 14a.

Moreover, a pressure sensor 15a for detecting the hydraulic pressure in the supply/discharge passage 14a is connected to the one supply/discharge passage 14a, and a pressure sensor 15b for detecting the hydraulic pressure in the supply/discharge passage 14b is connected to the other supply/discharge passage 14b. Signals showing the detected pressure are respectively sent from both pressure sensors 15a, 15b to the controller 28.

The charge circuit 16 is configured to be capable of introducing the hydraulic oil to the closed circuit 14 at a predetermined setting pressure. The charge circuit 16 includes a charge pump 36, a charge oil passage 38, a first check valve 40, a second check valve 42, an escape passage 44, a first relief valve 46, a second relief valve 48, and a third relief valve 50.

The charge pump 36 has a discharge opening 36a. The charge oil passage 38 is connected to the discharge opening 36a. The charge pump 36 discharges hydraulic oil from its discharge opening 36a to the charge oil passage 38 as a result of receiving the driving force that is transmitted from the engine 2 via the power divider 8.

The charge oil passage 38 connects the discharge opening 36a of the charge pump 36 and the closed circuit 14. Specifically, the charge oil passage 38 includes a connecting passage 38a and a discharge passage 38b.

The connecting passage 38a connects the pair of supply/discharge passages 14a, 14b. The connecting passage 38a is provided with the first check valve 40 and the second check valve 42.

One end of the discharge passage 38b is connected to the discharge opening 36a of the charge pump 36, and the other end of the discharge passage 38b is connected to a part between the first check valve 40 and the second check valve 42 of the connecting passage 38a.

One end of the escape passage 44 is connected to a part between the first check valve 40 and the second check valve 42 of the connecting passage 38a, and the other end of the escape passage 44 is connected to a hydraulic oil tank T. The first relief valve 46 is provided to the escape passage 44. Moreover, the second relief valve 48 is provided across a part that is closer to the connecting passage 38a side than the first relief valve 46 of the escape passage 44 and the one supply/discharge passage 14a of the pair of supply/discharge passages 14a, 14b. Further, the third relief valve 50 is provided across a part that is closer to the connecting passage 38a side than the first relief valve 46 of the escape passage 44 and the other supply/discharge passage 14b of the pair of supply/discharge passages 14a, 14b.

As a result of this kind of configuration of the charge circuit 16, the hydraulic oil discharged from the charge pump 36 is introduced into the connecting passage 38a through the discharge passage 38b, and supplied to the supply/discharge passage on the lower pressure side of both supply/discharge passages 14a, 14b through the corresponding first check valve 40 or the second check valve 42 at a pressure that is lower than the setting pressure of the first relief valve 46. Moreover, if the hydraulic pressure in the one supply/discharge passage 14a becomes greater than the setting pressure of the second relief valve 48, the hydraulic oil is released from the one supply/discharge passage 14a to the escape passage 44 through the second relief valve 48. Further, if the hydraulic pressure in the other supply/discharge passage 14b becomes greater than the setting pressure of the third relief valve 50, the hydraulic oil is released from the other supply/discharge passage 14b to the escape passage 44 through the third relief valve 50. And if the hydraulic pressure in the part that is position at the upstream side of the first relief valve 46 of the charge oil passage 38 and the escape passage 44 becomes greater than the setting pressure of the first relief valve 46, the hydraulic oil is released to the hydraulic oil tank T through the first relief valve 46.

The work device (not shown) is a device that is capable of performing predetermined work, and is covered by the concept of the first work device of the present invention. For example, if the work vehicle is a wheel crane, the work device is a crane, and if the work vehicle is a wheel excavator, the work device is a shovel.

The work device drive circuit 18 is a circuit for driving the work device. The work device drive circuit 18 is branched from the closed circuit 14 so that the hydraulic oil can flow in from the closed circuit 14.

Specifically, the work device drive circuit 18 includes a hydraulic driving member 52 and a branch passage 54.

The hydraulic driving member 52 is used for driving the work device, and is configured from a variable displacement-type work-related hydraulic motor 52a (hereinafter simply referred as the work-related motor 52a). The work-related motor 52a is mounted on the work device so as to apply driving force to the work device. The work device performs predetermined work by being operated as a result of receiving the driving force from the work-related motor 52a. The work-related motor 52a includes an inlet/outlet 52b of one side and an inlet/outlet 52c of another side.

The branch passage 54 is branched from the closed circuit 14, and is configured to be capable of supplying hydraulic oil to the work-related motor 52a of the hydraulic driving member 52. The branch passage 54 is configured from a branch passage 54a of one side and a branch passage 54b of another side, and both branch passages 54a, 54b are covered by the concept of the work-related supply route of the present invention. One end of the branch passage 54a of one side is connected to the one supply/discharge passage 14a, and the other end of the branch passage 54a of one side is connected to the inlet/outlet 52b of one side of the work-related motor 52a. One end of the branch passage 54b of the other side is connected to the other supply/discharge passage 14b, and the other end of the branch passage 54b of the other side is connected to the inlet/outlet 52c of the other side of the work-related motor 52a. According to this kind of configuration, if hydraulic oil is to be discharged from the hydraulic pump 10 to the one supply/discharge passage 14a, the discharged hydraulic oil can be supplied to the work-related motor 52a through the branch passage 54a of one side. Moreover, if hydraulic oil is to be discharged from the hydraulic pump 10 to the other supply/discharge passage 14b, the discharged hydraulic oil can be supplied to the work-related motor 52a through the branch passage 54b of the other side.

The wheel drive unit switching unit 20 is provided to the wheel drive unit 12. The wheel drive unit switching unit 20 is configured to be capable of switching the wheel drive unit 12 between a wheel driving state and a wheel non-driving state. The wheel driving state is a state that the wheel drive unit 12 becomes drivable so as to drive the wheels 6. The wheel non-driving state is a state that the wheel drive unit 12 becomes non-drivable so as to do not drive the wheels 6.

Specifically, the wheel drive unit switching unit 20 is configured to be capable of switching the travel motor 32 of the wheel drive unit 12 between a drivable state and a non-drivable state. The wheel drive unit switching unit 20 is configured from a travel-related braking device 20a provided to the axle device 34. The travel-related braking device 20a is configured to be capable of applying a parking brake to the wheels 6. The parking brake of the travel-related braking device 20a is able to prevent the wheels 6 from rotating. When the travel-related braking device 20a applies a parking brake to the wheels 6, a brake is also applied to the travel motor 32 via the axle and the output shaft 32c, and the travel motor 32 becomes non-drivable. Specifically, the travel-related braking device 20a is capable of applying a brake to the travel motor 32. Meanwhile, when the travel-related braking device 20a releases the parking brake, the brake that is applied to the travel motor 32 is released, and the travel motor 32 becomes drivable.

The hydraulic driving member switching unit 22 is provided to the work device drive circuit 18, and is configured to be capable of switching the hydraulic driving member 52 between a work device driving state and a work device non-driving state. The work device driving state is a state that the hydraulic driving member 52 becomes drivable so as to drive the work device. The work device non-driving state is a state that the hydraulic driving member 52 becomes non-drivable so as to do not drive the work device.

Specifically, the hydraulic driving member switching unit 22 is configured to be capable of switching the work-related motor 52a between a drivable state and a non-drivable state. The hydraulic driving member switching unit 22 is configured from switching valves 22a, 22b provided to the branch passage 54.

The switching valve 22a of one side is a solenoid valve, and is provided to the branch passage 54a of one side. The switching valve 22a of one side is configured so that it can be switched between a first position P1 that prevents the hydraulic oil from flowing from the one supply/discharge passage 14a of the closed circuit 14 to the work-related motor 52a through the branch passage 54a of one side, and a second position P2 that allows the hydraulic oil to flow from the one supply/discharge passage 14a to the work-related motor 52a through the branch passage 54a of one side. When the hydraulic oil is to be discharged from the hydraulic pump 10 to the one supply/discharge passage 14a, if the switching valve 22a of one side is in the first position P1 and the hydraulic oil is prevented from flowing from the one supply/discharge passage 14a to the work-related motor 52a through the branch passage 54a of one side, the work-related motor 52a becomes non-drivable. Meanwhile, if the switching valve 22a of one side is in the second position P2 and the hydraulic oil is allowed to flow from the one supply/discharge passage 14a to the work-related motor 52a through the branch passage 54a of one side, the work-related motor 52a becomes drivable.

The switching valve 22b of the other side is provided to the branch passage 54b of the other side, and is configured the same as the switching valve 22a of one side. Specifically, the switching valve 22b of the other side is configured so that it can be switched between a first position P1 that prevents the hydraulic oil from flowing from the other supply/discharge passage 14b to the work-related motor 52a through the branch passage 54b of the other side, and a second position P2 that allows the hydraulic oil to flow from the other supply/discharge passage 14b to the work-related motor 52a through the branch passage 54b of the other side. The switching valve 22b of the other side operates in a similar manner as the switching valve 22a of one side. Specifically, when the switching valve 22b of the other side is in the first position P1, the hydraulic oil is prevented from flowing to the work-related motor 52a through the branch passage 54b of the other side, and the work-related motor 52a becomes non-drivable. Meanwhile, when switching valve 22b of the other side is in the second position P2, the hydraulic oil is allowed to flow to the work-related motor 52a through the branch passage 54b of the other side, and the work-related motor 52a becomes drivable.

The operating device 24 is operated by an operator for designating an operation of the work device. Specifically, the operating device 24 includes an operating lever 24a and an operating device body 24b. The operating lever 24a is provided to the operating device body 24b, and can be moved in a predetermined range of movement in relation to the operating device body 24b. The operating device body 24b has a function of sending to the controller 28 a signal representing the amount that the operating lever 24a was moved from its neutral position; that is, the operator's manipulated variable from the neutral position of the operating lever 24a.

The travel mode switching device 26 is operated by the operator for switching the travel mode of the work vehicle. Specifically, the operator can select either the parked state or traveling state as the travel mode of the work vehicle by operating the travel mode switching device 26. The travel mode switching device 26 includes an operating lever 26a and a switching device body 26b. The operating lever 26a is provided to the switching device body 26b. The operating lever 26a can be moved between a position for designating the parked state and a position for designating the traveling state. The switching device body 26b has a function of sending to the controller 28 a signal (travel mode selection signal) according to the travel mode (parked state or traveling state) that was selected as a result of the operator operating the operating lever 26a.

The controller 28 is used for controlling the operation of the respective components of the work vehicle, and is covered by the concept of the control unit of the present invention. Specifically, the controller 28 controls the switching of the switching valves 22a, 22b between the first position P1 and the second position P2 by sending a control signal to the switching valve 22a of one side and the switching valve 22b of the other side according to the travel mode selection signal that was sent from the travel mode switching device 26. Specifically, the controller 28 sets the switching valves 22a, 22b to the first position P1 when the input travel mode selection signal is for selecting the traveling state. Meanwhile, the controller 28 sets the switching valves 22a, 22b to the second position P2 when the input travel mode selection signal is for selecting the parked state.

Moreover, the controller 28 causes the travel-related braking device 20a to switch the application and release of the parking brake to the wheels 6 according to the travel mode selection signal sent from the travel mode switching device 26. Specifically, the controller 28 causes the travel-related braking device 20a to apply the parking brake to the wheels 6 when the input travel mode selection signal is for selecting the parked state. Meanwhile, the controller 28 causes the travel-related braking device 20a to release the parking brake applied to the wheels 6 when the input travel mode selection signal is for selecting the traveling state.

In addition, the controller 28 controls the capacity of the hydraulic pump 10 according to the signal sent from the operating device 24. Specifically, a signal representing the manipulated variable of the operating lever 24a operated by the operator is input to the controller 28 from the operating device body 24b, and the controller 28 controls the capacity of the hydraulic pump 10 according to the input signal. Here, if the input signal shows an increase in the manipulated variable from the neutral position of the operating lever 24a, the controller 28 increases the capacity of the hydraulic pump 10. Meanwhile, if the input signal shows a decrease in the manipulated variable from the neutral position of the operating lever 24a, the controller 28 decreases the capacity of the hydraulic pump 10.

Furthermore, the controller 28 controls the capacity of the work-related motor 52a and controls the capacity of the travel motor 32.

The operation of the work vehicle according to the first embodiment is now explained.

With the work vehicle of the first embodiment, when the engine 2 is initially driven, the driving force of the engine 2 is transmitted to the hydraulic pump 10 via the power divider 8. The hydraulic pump 10 is driven thereby and hydraulic oil is discharged from the hydraulic pump 10 to the closed circuit 14. If the operator selects the traveling state with the travel mode switching device 26 in a state where the hydraulic oil is being discharged from the hydraulic pump 10 to the closed circuit 14, the controller 28 causes the travel-related braking device 20a to release the parking brake applied to the wheels 6, and sets the switching valves 22a, 22b to the first position P1. As a result of the switching valves 22a, 22b being set to the first position P1, the hydraulic oil that is discharged from the hydraulic pump 10 to the closed circuit 14 will not flow to the work-related motor 52a through the branch passage 54a of one side or the branch passage 54b of the other side. Thus, the work-related motor 52a becomes non-drivable, and the work device consequently becomes non-drivable. Here, approximately the entire amount of hydraulic oil that was discharged from the hydraulic pump 10 to the closed circuit 14 is supplied to the travel motor 32. The travel motor 32 is thereby driven, and the driving force of the travel motor 32 is transmitted to the wheels 6 via the axle device 34. Consequently, the wheels 6 are rotated and enable the work vehicle to travel.

The rotational frequency of the engine 2 is controlled according to the manipulated variable of the acceleration device 4 operated by the operator. The travel speed of the work vehicle is controlled based on the control of the rotational frequency of the engine 2. Specifically, if the amount by which the accelerator was depressed by the operator is increased, the rotational frequency of the engine 2 increases, the amount that the hydraulic pump 10 is driven consequently increases, and the discharge rate of the hydraulic oil from the hydraulic pump 10 increases. When the discharge rate of the hydraulic oil from the hydraulic pump 10 increases, the rotational frequency of the travel motor 32 increases and, therefore, the rotational speed of the wheels 6 increases. Consequently, the travel speed of the work vehicle increases. Meanwhile, if the amount by which the accelerator was depressed by the operator is decreased, contrary to the case where the amount by which the accelerator was depressed is increased, the rotational frequency of the engine 2 decreases, the amount that the hydraulic pump 10 is consequently driven, the discharge rate of the hydraulic oil from the hydraulic pump 10, and the rotational frequency of the travel motor 32 decrease. Consequently, the rotational speed of the wheels 6 decreases, and the travel speed of the work vehicle decreases.

Incidentally, if the discharge pressure of the hydraulic pump 10 increases, the power that is required for driving the hydraulic pump 10 (hereinafter referred to as the power requirement of the hydraulic pump 10) increases. The power requirement of the hydraulic pump 10 can be sought based on the product of the discharge pressure of the hydraulic pump 10 and the capacity of the hydraulic pump 10 if efficiency is ignored. If the power requirement of the hydraulic pump 10 increases beyond the output of the engine 2, the engine 2 will stop. Thus, in order to avoid the engine 2 from stopping when the work vehicle is in a traveling state, the controller 28 controls the capacity of the hydraulic pump 10 so that the power requirement of the hydraulic pump 10 does not exceed the output of the engine 2 (first capacity control).

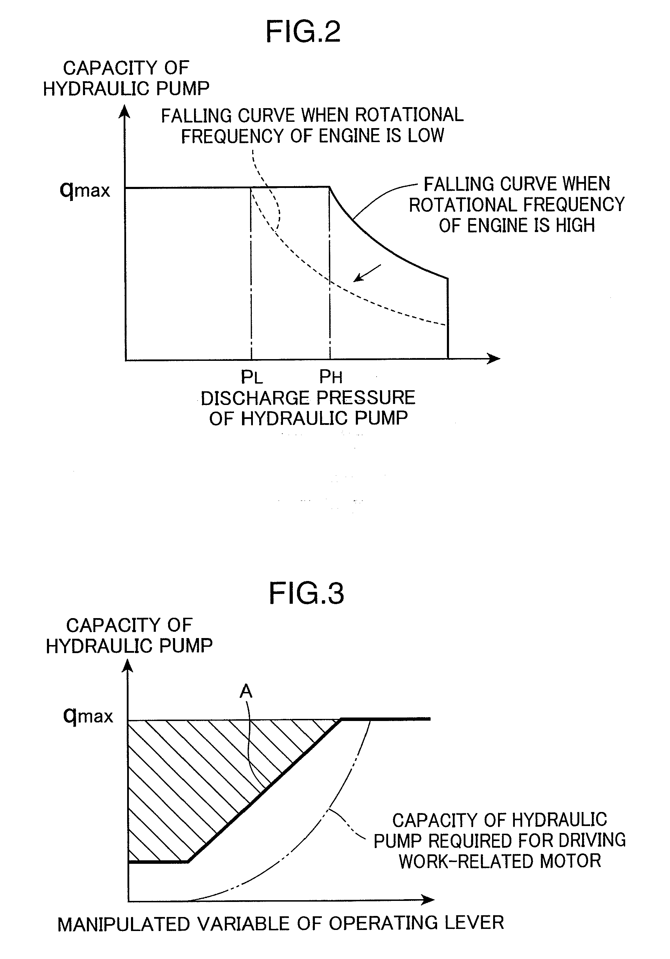

Specifically, as shown in Fig. 2, even if the discharge pressure of the hydraulic pump 10 increases, the capacity of the hydraulic pump 10 is fixed at a maximum capacity qₘₐₓ up to a predetermined discharge pressure P_{H} in which the power requirement of the hydraulic pump 10 does not exceed the output of the engine 2. In other words, the maximum capacity qₘₐₓ is set to a capacity where the power requirement of the hydraulic pump 10 does not exceed the output of the engine 2 so as long as the discharge pressure of the hydraulic pump 10 is not greater than the predetermined discharge pressure P_{H}. If the discharge pressure of the hydraulic pump 10 exceeds the predetermined discharge pressure P_{H} and continues to increase, the controller 28 gradually decreases the capacity of the hydraulic pump 10 according to the falling curve shown with the solid line in Fig. 2. The falling curve is set to be a curve so that the power requirement of the hydraulic pump 10 sought based on the product of the discharge pressure and capacity of the hydraulic pump 10 will be smaller than the output of the engine 2.

Moreover, the predetermined discharge pressure P_{H} and the falling curve that are set in the controller 28 will change according to the rotational frequency of the engine 2. Specifically, if the rotational frequency of the engine 2 is high, the predetermined discharge pressure is P_{H}, and the falling curve is in a state shown with the solid line in Fig. 2. Meanwhile, if the rotational frequency of the engine 2 decreases, the predetermined discharge pressure consequently decreases to P_{L} as shown in Fig. 2, and the falling curve also moves to an overall lower value as shown with the broken line in Fig. 2. Consequently, even if the output of the engine 2 decreases, the power requirement of the hydraulic pump 10 is maintained at a value that is smaller than the output of the engine 2.

Meanwhile, when the work device is driven; that is, when the operator selects the parked state with the travel mode switching device 26 in a state where the hydraulic oil is being discharged from the hydraulic pump 10 to the closed circuit 14, the controller 28 causes the travel-related braking device 20a to apply the parking brake, and sets the switching valves 22a, 22b to the second position P2. As a result of the travel-related braking device 20a applying the parking brake, the travel motor 32 becomes non-drivable, and the work vehicle becomes a parked state. Here, the hydraulic oil will not flow to the travel motor 32 as a result of the travel motor 32 becoming non-drivable. Meanwhile, since the hydraulic oil is allowed to flow through the switching valves 22a, 22b that are in the second position P2, approximately the entire amount of the hydraulic oil that is discharged from the hydraulic pump 10 to the closed circuit 14 is supplied to the work-related motor 52a through the branch passage 54.

Specifically, when the hydraulic oil is being discharged from the hydraulic pump 10 to the one supply/discharge passage 14a, the hydraulic oil is supplied to the work-related motor 52a through the branch passage 54a of one side, and the return oil from the work-related motor 52a is subsequently returned to the hydraulic pump 10 through the branch passage 54b of the other side and the other supply/discharge passage 14b. Meanwhile, if the hydraulic oil is being discharged from the hydraulic pump 10 to the other supply/discharge passage 14a, the hydraulic oil is supplied to the work-related motor 52a through the reverse path, and the return oil from the work-related motor 52a is returned to the hydraulic pump 10. As a result of the hydraulic oil being supplied to the work-related motor 52a as described above, the work-related motor 52a is driven, and the work device is consequently driven.

Here, as shown with section A in Fig. 3, the controller 28 increases or decreases the capacity of the hydraulic pump 10 according to the increase or decrease in the manipulated variable of the operating lever 24a of the operating device 24 operated by the operator (second capacity control). Specifically, with the second capacity control, as shown with section A in Fig. 3, the capacity of the hydraulic pump 10 is increased in direct proportion to the increase in the manipulated variable of the operating lever 24a. When the capacity of the hydraulic pump 10 reaches the maximum capacity qₘₐₓ, the capacity of the hydraulic pump 10 is maintained at the maximum capacity qₘₐₓ even if the manipulated variable of the operating lever 24a is further increases. Incidentally, the capacity of the hydraulic pump 10 that is actually required for driving the work-related motor 52a in relation to the manipulated variable of the operating lever 24a is shown with the dashed two dotted line in Fig. 3. Accordingly, if the capacity of the hydraulic pump 10 is not controlled when the work device is driven and the capacity of the hydraulic pump 10 is fixed at the maximum capacity qₘₐₓ, the capacity of the hydraulic pump 10 will increase unnecessarily in relation to the required capacity. Meanwhile, if the capacity of the hydraulic pump 10 is controlled according to the manipulated variable of the operating lever 24a as in the second capacity control, the pump capacity (discharge rate of the hydraulic pump 10) of the hatched portion in Fig. 3 can be reduced.

Moreover, when the work device is to be driven, the controller 28 selects the foregoing first capacity control or the second capacity control of the hydraulic pump 10, whichever results in a lower discharge pressure of the hydraulic pump 10. Consequently, the power requirement of the hydraulic pump 10 does not exceed the output of the engine 2 even when the work device is driven and, therefore, the engine 2 can be prevented from stopping as in the case when the work vehicle is in a traveling state.

As explained above, with the work vehicle according to the first embodiment, when the work vehicle is in a traveling state, the controller 28 controls the travel-related braking device 20a to cause the travel-related braking device 20a to make the travel motor 32 drivable, and controls the switching valves 22a, 22b to cause the switching valves 22a, 22b to make the work-related motor 52a non-drivable. Accordingly, with the first embodiment, when the work vehicle is to travel, such work vehicle can travel by driving the wheel drive unit 12 with the hydraulic pressure of the hydraulic oil that is supplied from the hydraulic pump 10 and thereby rotating the wheels 6. Moreover, with the first embodiment, when the work device is to be driven, the controller 28 controls the travel-related braking device 20a to cause the travel-related braking device 20a to make the travel motor 32 non-drivable, and controls the switching valves 22a, 22b to cause the switching valves 22a, 22b to make the work-related motor 52a drivable. Thus, when the work device is to be driven, the work-related motor 52a can be driven with the hydraulic pressure of the hydraulic oil that is supplied from the hydraulic pump 10, and thereby operate the work device. Accordingly, with the first embodiment, the work vehicle can travel based on hydraulic pressure and the first work device can be hydraulically driven.

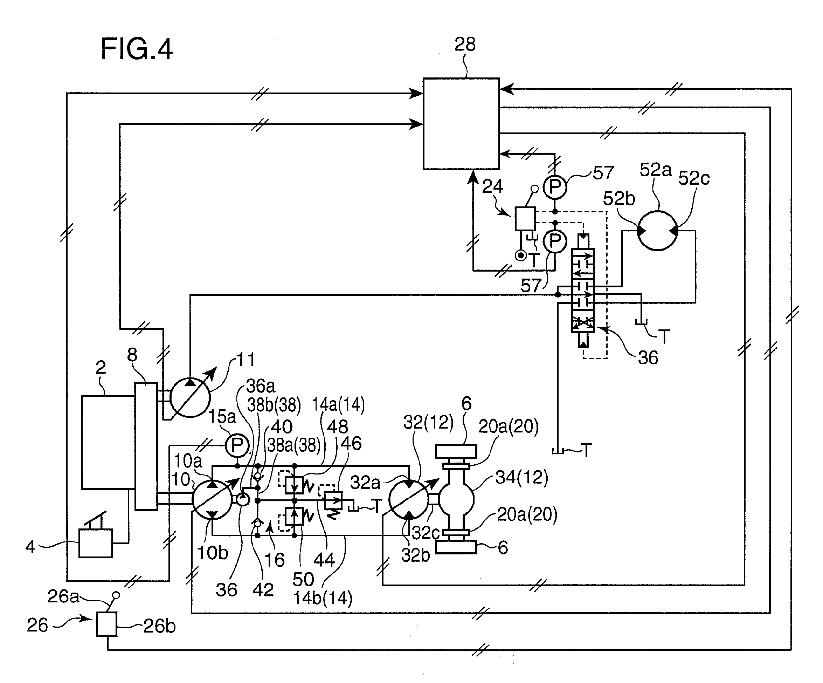

Moreover, with the first embodiment, while the hydraulic oil can be supplied from the hydraulic pump 10 to the travel motor 32 through the closed circuit 14, the hydraulic oil can also be supplied to the work-related motor 52a from the hydraulic pump 10 via the closed circuit 14 and the branch passage 54. In other words, a single hydraulic pump 10 is able to supply the hydraulic oil to both the travel motor 32 and the work-related motor 52a. Thus, unlike the configuration shown with the comparative example of Fig. 4 where the hydraulic pump 10 for supplying hydraulic oil to the travel motor 32 and the hydraulic pump 11 for supplying hydraulic oil to the work-related motor 52a of the work device are separately provided and both hydraulic pumps 10, 11 being simultaneously driven by the engine 2, with the first embodiment, it is possible to prevent the deterioration of fuel consumption caused by the idling of the hydraulic pump 11 for supplying the hydraulic oil to the work-related motor 52a when the work vehicle is in a traveling state.

Moreover, with the first embodiment, since the switching valves 22a, 22b are provided to the branch passage 54 of the work device drive circuit 18, the hydraulic oil will not flow through the switching valves 22a, 22b provided to the branch passage 54 when the hydraulic oil is to be supplied to the travel motor 32 through the closed circuit 14 when the work vehicle is in a traveling state. Thus, it is possible to prevent the occurrence of pressure loss caused by the hydraulic oil passing through the switching control valve provided to the closed circuit when the work vehicle is in a traveling state and, consequently, it is possible to prevent the deterioration of fuel consumption caused by such pressure loss. Accordingly, with the first embodiment, it is possible to prevent the deterioration of fuel consumption during the travel of the work vehicle while enabling the work vehicle to travel based on hydraulic pressure and the work device to be hydraulically driven.

Moreover, with the first embodiment, since the controller 28 performs first capacity control of controlling the capacity of the hydraulic pump 10 so that the power requirement of the hydraulic pump 10 does not exceed the output of the engine 2 when the work vehicle is in a traveling state, it is possible to prevent the engine 2 from stopping which is caused by the power requirement of the hydraulic pump 10 exceeding the output of the engine 2 when the work vehicle is in a traveling state.

Moreover, with the first embodiment, when the work device is driven, the controller 28 selects and performs the first capacity control or second capacity control of increasing or decreasing capacity of the hydraulic pump 10 according to increase or decrease of a manipulated variable of the operating lever 24a operated by the operator, whichever results in a lower discharge pressure of the hydraulic pump 10. Thus, if the discharge pressure of the hydraulic pump 10 will be lower with the second capacity control in comparison to the first capacity control when the work device is driven, the capacity of the hydraulic pump 10 is increased or decreased according to the increase or decrease of the manipulated variable of the operating lever 24a operated by the operator, and it is thereby possible to prevent the capacity of the hydraulic pump 10 from becoming an excessively large capacity in relation to the manipulated variable. Since it is thereby possible to prevent the power required for driving the hydraulic pump 10 from becoming unnecessarily large, it is possible to improve the fuel consumption. Moreover, if the discharge pressure of the hydraulic pump 10 will be lower with the first capacity control in comparison to the second capacity control when the work device is driven, since the capacity of the hydraulic pump 10 is controlled so that the power required for driving the hydraulic pump 10 does not exceed the output of the engine 2, as with the case when the work vehicle is in a traveling state as described above, it is possible to prevent the engine 2 from stopping.

### (Second Embodiment)

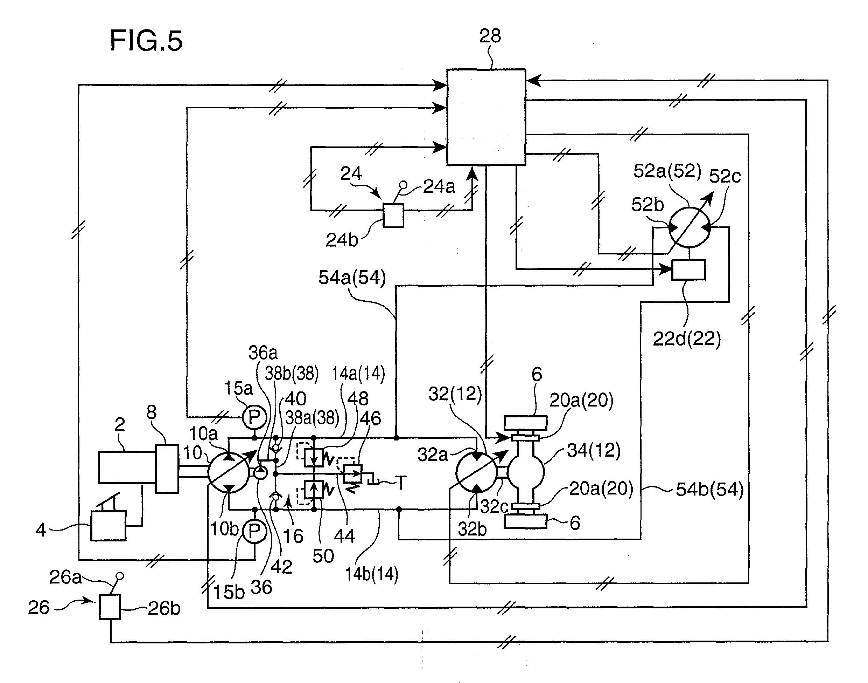

The configuration of the hydraulic work vehicle according to the second embodiment of the present invention is now explained with reference to Fig. 5.

With the hydraulic work vehicle according to the second embodiment, unlike the foregoing first embodiment, the hydraulic driving member switching unit 22 is configured from a work-related braking device 22d that is capable of applying a brake to the work-related motor 52a, and the switching valves 22a, 22b in the first embodiment are not provided to the branch passage 54.

Specifically, the work-related braking device 22d is attached to the work-related motor 52a. The work-related motor 52a becomes non-drivable when a brake is applied by the work-related braking device 22d. Meanwhile, the work-related motor 52a becomes drivable when the brake is released by the work-related braking device 22d.

The controller 28 performs the switching control of causing the work-related braking device 22d to apply a brake to or releasing the applied brake of the work-related motor 52a according to the travel mode selection signal that is input from the travel mode switching device 26.

Specifically, with the second embodiment, when the operator selects the traveling state with the travel mode switching device 26 and a signal designating the traveling state is input from the travel mode switching device 26 into the controller 28, the controller 28 causes the work-related braking device 22d to apply a brake to the work-related motor 52a according to the input signal. The work-related motor 52a thereby becomes a non-drivable state when the work vehicle is in a traveling state. And in this state, hardly any hydraulic oil will flow into the work-related motor 52a. Meanwhile, the controller 28 causes the travel-related braking device 20a to release the parking brake according to a signal designating the traveling state which was input from the travel mode switching device 26. The travel motor 32 thereby becomes drivable. Thus, approximately the entire amount of the hydraulic oil that was discharged from the hydraulic pump 10 to the closed circuit 14 is supplied to the travel motor 32, and the travel motor 32 is driven by the hydraulic pressure of the hydraulic oil.

When the operator subsequently selects the parked state with the travel mode switching device 26 and a signal designating the parked state is input from the travel mode switching device 26 into the controller 28, the controller 28 causes the work-related braking device 22d to release the brake applied to the work-related motor 52a according to the input signal. When the work vehicle is to be stopped and the work device is to be driven, the work-related motor 52a becomes a drivable state. And in this state, the hydraulic oil can flow into the work-related motor 52a. Meanwhile, the controller 28 causes the travel-related braking device 20a to apply the parking brake according to a signal designating the parked state which was input from the travel mode switching device 26. The travel motor 32 thereby becomes non-drivable. Thus, approximately the entire amount of the hydraulic oil that was discharged from the hydraulic pump 10 to the closed circuit 14 is supplied to the work-related motor 52a, and the work-related motor 52a is driven with the hydraulic pressure of the hydraulic oil.

The configuration and operation of the work vehicle according to the second embodiment other than those described above are the same as the foregoing first embodiment.

When the work-related motor 52a is to be switched between a drivable state and a non-drivable state by switching the supply or non-supply of the hydraulic oil to the work-related motor 52a with the switching valves 22a, 22b provided to the branch passage 54 as with the foregoing first embodiment, the hydraulic oil flows through the switching valves 22a, 22b provided to the branch passage 54 when the work device is driven. Thus, pressure loss of the hydraulic oil will occur. Meanwhile, with the second embodiment, the work-related motor 52a is made to be non-drivable by the work-related braking device 22d applying a brake to the work-related motor 52a when the work vehicle is in a traveling state on the one hand, and the work-related motor 52a is made to be drivable by the work-related braking device 22d releasing the brake applied to the work-related motor 52a when the work device is driven. Thus, pressure loss caused by the hydraulic oil passing through the switching valves 22a, 22b provided to the branch passage 54 as in the foregoing first embodiment will not occur when the work device is driven. Accordingly, with the second embodiment, the fuel consumption can be improved in comparison to the foregoing first embodiment.

The effects of the second embodiment other than those described above are the same as the foregoing first embodiment.

### (Third Embodiment)

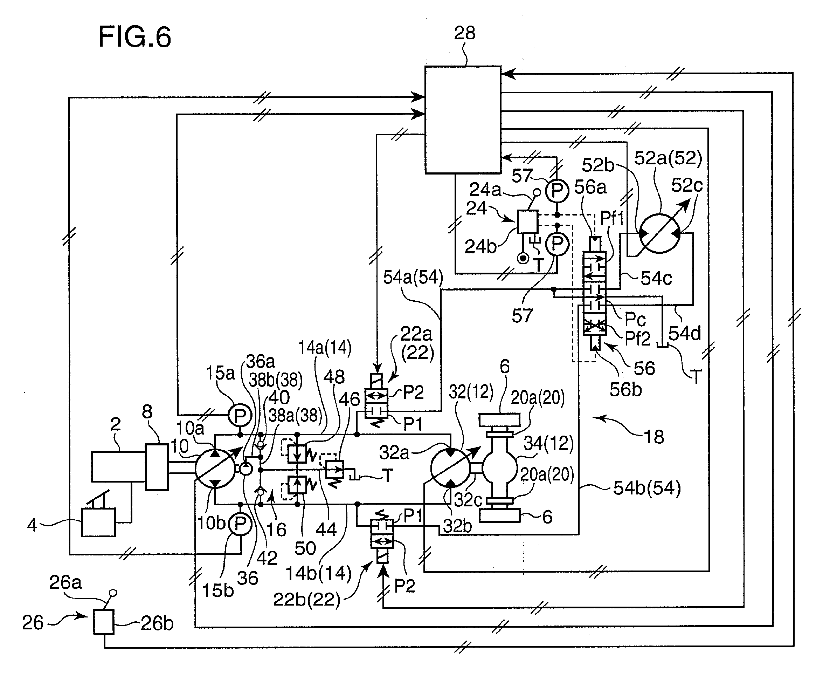

The configuration of the hydraulic work vehicle according to the third embodiment of the present invention is now explained with reference to Fig. 6.

With the hydraulic work vehicle according to the third embodiment, the controller 28 causes a flow regulating valve 56 to regulate the flow direction and flow rate of the hydraulic oil that is supplied to the work-related motor 52a through the branch passage 54.

Specifically, with the third embodiment, the work device drive circuit 18 includes a flow regulating valve 56 that is provided to the branch passage 54. Moreover, the work device drive circuit 18 includes a connecting passage 54c of one side and a connecting passage 54d of another side. One end of the connecting passage 54c of one side is connected to the inlet/outlet 52b of one side of the work-related motor 52a, and one end of the connecting passage 54d of the other side is connected to the inlet/outlet 52c of the other side of the work-related motor 52a. The flow regulating valve 56 is connected to the other end of the connecting passage 54c of one side and the other end of the connecting passage 54d of the other side, and an end on the opposite side of the one supply/discharge passage 14a of the branch passage 54a of one side and an end on the opposite side of the other supply/discharge passage 14b of the branch passage 54b of the other side.

The flow regulating valve 56 can be switched among a neutral position P_{C} which blocks the flow of hydraulic oil between the branch passage 54a of one side and the branch passage 54b of the other side, and the connecting passage 54c of one side and the connecting passage 54d of the other side, a first flow position P_{f1} which allows the hydraulic oil flowing from the one supply/discharge passage 14a to the branch passage 54a of one side to flow to the connecting passage 54c of one side and which allows the hydraulic oil to flow from the connecting passage 54d of the other side to the branch passage 54b of the other side, and a second flow position P_{f2} which allows the hydraulic oil flowing from the one supply/discharge passage 14a to the branch passage 54a of one side to flow to the connecting passage 54d of the other side and which allow the hydraulic oil to flow from the connecting passage 54c of one side to the branch passage 54b of the other side. Moreover, the flow regulating valve 56 can be switched based on hydraulic pressure (pilot pressure). The flow regulating valve 56 includes two ports 56a, 56b to which the pilot pressure is introduced.

The operating device body 24b of the operating device 24 supplies pilot pressure to the port 56a of one side or the port 56b of the other side of the flow regulating valve 56 according to the operating direction of the operating lever 24a. Incidentally, a pressure sensor 57 for detecting the pressure in the supply path is connected respectively to the supply path of the pilot pressure from the operating device body 24b to the port 56a of one side and the supply path of the pilot pressure from the operating device body 24b to the port 56b of the other side. Both pressure sensors 57 send a signal showing the detected pressure to the controller 28.

The operating device body 24b does not supply the pilot pressure to either the port 56a of one side or the port 56b of the other side when the operating lever 24a is in the neutral position. In the foregoing case, the flow regulating valve 56 becomes the neutral position P_{C}, and, even if the hydraulic oil that was discharged from the hydraulic pump 10 to the one supply/discharge passage 14a in a parked state flows into the branch passage 54a of one side, such hydraulic oil is not supplied to the work-related motor 52a. This hydraulic oil flows from the branch passage 54a of one side to the hydraulic oil tank T through the flow regulating valve 56.

When the operating lever 24a is subsequently operated toward one side from its neutral position, the operating device body 24b supplies the pilot pressure to the port 56a of one side. The flow regulating valve 56 thereby moves from the neutral position P_{C} to the first flow position P_{f1} side. In the foregoing case, the hydraulic oil that was discharged from the hydraulic pump 10 to the one supply/discharge passage 14a in a parked state and flowed into the branch passage 54a of one side is supplied to the work-related motor 52a through the connecting passage 54c of one side. The return oil from the work-related motor 52a is returned from the connecting passage 54d of the other side to the other supply/discharge passage 14b through the branch passage 54b of the other side. Here, the work-related motor 52a rotates positively.

The pilot pressure that is supplied from the operating device body 24b to the port 56a of one side is increased or decreased according to the manipulated variable toward one side from the neutral position of the operating lever 24a. Specifically, when the manipulated variable toward one side of the operating lever 24a increases, the pilot pressure that is supplied from the operating device body 24b to the port 56a of one side increases. If the pilot pressures that is supplied to the port 56a of one side increases, the amount of movement from the neutral position P_{C} of the flow regulating valve 56 to the first flow position P_{f1} side increases. Pursuant to the increase in the amount of movement to the first flow position P_{f1} side, the flow tolerance of the hydraulic oil from the branch passage 54a of one side to the connecting passage 54c of one side and the flow tolerance of the return oil from the connecting passage 54d of the other side to the branch passage 54b of the other side will increase. Then the rotational speed of the work-related motor 52a in the normal rotating direction increases. Incidentally, if the manipulated variable toward one side of the operating lever 24a decreases, contrary to the above, the rotational speed of the work-related motor 52a in the normal rotating direction decreases.

Meanwhile, when the operating lever 24a is operated to the other side from the neutral position, the operating device body 24b supplies the pilot pressure to the port 56b of the other side. The flow regulating valve 56 thereby moves from the neutral position P_{C} to the second flow position P_{f2} side. In the foregoing case, the hydraulic oil that was discharged from the hydraulic pump 10 to the one supply/discharge passage 14a in a parked state that flowed into the branch passage 54a of one side is supplied to the work-related motor 52a through the connecting passage 54d of the other side. The return oil from the work-related motor 52a is returned to the branch passage 54b of the other side through the connecting passage 54c of one side. Here, the work-related motor 52a rotates negatively.

The pilot pressure that was supplied from the operating device body 24b to the port 56b of the other side is increased or decreased according to the manipulated variable toward the other side from the neutral position of the operating lever 24a. In the foregoing case, as with the foregoing case where the operating lever 24a is operated toward one side, the amount of hydraulic oil that is supplied to the work-related motor 52a increases or decreases and, consequently, the rotational speed of the work-related motor 52a in the reverse rotating direction increases or decreases.

The configuration and operation of the work vehicle according to the third embodiment other than those described above are the same as the foregoing first embodiment.

As explained above, with the third embodiment, the rotational speed of the work-related motor 52a can be controlled according to the manipulated variable of the operating lever 24a operated by the operator and, consequently, the drive speed and the like of the work device can be controlled according to the manipulated variable of the operating lever 24a operated by the operator. Incidentally, as a result of using the flow regulating valve 56, detailed flow rate control can be performed in comparison to the flow rate control of the hydraulic oil by controlling the discharge rate of the hydraulic pump 10, and the flow regulating valve 56 has superior responsiveness. Thus, with the third embodiment, it is possible to accurately regulate the flow rate of the hydraulic oil supplied to the work-related motor 52a according to the minimal operation of the operating lever 24a even if the manipulated variable of the operating lever 24a operated by the operator is minimal, and improve the responsiveness of regulating the flow rate of the hydraulic oil supplied to the work-related motor 52a in relation to the operation of the operating lever 24a.

### (Fourth Embodiment)

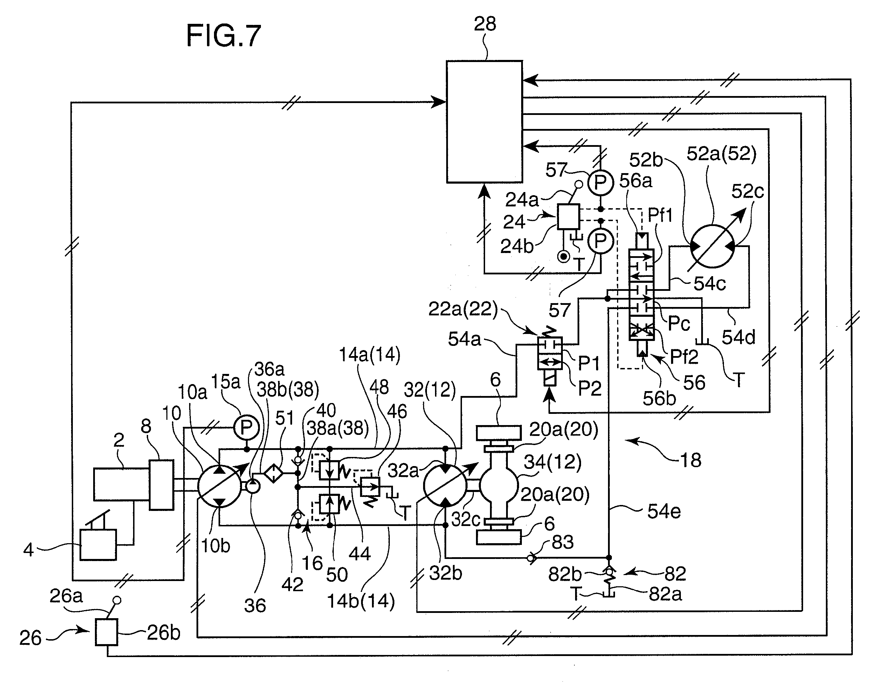

The configuration of the hydraulic work vehicle according to the fourth embodiment of the present invention is now explained with reference to Fig. 7.

With the hydraulic work vehicle according to the fourth embodiment, the configuration is such that the hydraulic oil to the work-related motor 52a can only be supplied from the one supply/discharge passage 14a of the closed circuit 14, and the flow rate of the hydraulic oil to be supplied to the work-related motor 52a can be regulated with the flow regulating valve 56. In addition, with the fourth embodiment, predetermined back pressure is applied to the return oil from the work-related motor 52a and returned to the other supply/discharge passage 14b of the closed circuit 14.

Specifically, the configuration of the work vehicle according to the fourth embodiment is basically the same as the configuration of the work vehicle according to the foregoing third embodiment. In other words, of the work vehicle according to the fourth embodiment, the part where the flow direction and flow rate of the hydraulic oil from the branch passage 54a of one side to the work-related motor 52a in a parked state are controlled with the flow regulating valve 56 according to the operation of the operating lever 24a by the operator is configured the same as the corresponding part of the foregoing third embodiment.

Nevertheless, with the fourth embodiment, only the branch passage 54a of one side is covered by the concept of the work-related supply route of the present invention. Specifically, with the fourth embodiment, the hydraulic oil that is supplied to the work-related motor 52a is only the hydraulic oil that is discharged from the hydraulic pump 10 to the one supply/discharge passage 14a and which flows from the one supply/discharge passage 14a through the branch passage 54a of one side. Moreover, with the fourth embodiment, in substitute for the branch passage 54b of the other side, the work-related return oil passage 54e is connecting the flow regulating valve 56 and the other supply/discharge passage 14b. In addition, the switching valve 22b of the other side of the foregoing third embodiment is not provided to the work-related return oil passage 54e. Moreover, a back pressure generating device 82 is connected to the work-related return oil passage 54e. A check valve 83 for preventing the hydraulic oil from flowing backward from the other supply/discharge passage 14b side to the flow regulating valve 56 side is provided to a part that is closer to the other supply/discharge passage 14b side than that the connection of the back pressure generating device 82 of the branch passage 54b of the other side.

The back pressure generating device 82 includes an escape passage 82a and a back pressure check valve 82b.

The escape passage 82a is branched from the work-related return oil passage 54e and connected to the hydraulic oil tank T. The back pressure check valve 82b is provided to the escape passage 82a. When the pressure of the return oil from the work-related motor 52a that is flowing through the work-related return oil passage 54e becomes greater than the setting pressure of the back pressure check valve 82b, a part of the return oil is released from the work-related return oil passage 54e to the hydraulic oil tank T through the escape passage 82a. A back pressure corresponding to the setting pressure of the back pressure check valve 82b is thereby applied to the return oil that is flowing through the work-related return oil passage 54e. The return oil to which the back pressure was applied is returned to the other supply/discharge passage 14b through the check valve 83. Since the setting pressure of the back pressure check valve 82b is set to be greater than the hydraulic pressure in the other supply/discharge passage 14b, a back pressure that is greater than the hydraulic pressure in the other supply/discharge passage 14b is also applied to the return oil, and the return oil is thereby returned to the other supply/discharge passage 14b.

Moreover, with the fourth embodiment, the charge circuit 16 includes a filter 51 for filtering the hydraulic oil that flows through the charge oil passage 38. The filter 51 is provided to the discharge passage 38b of the charge oil passage 38. The hydraulic oil discharged from the charge pump 36 to the discharge passage 38b is thereby filtered with the filter 51, and subsequently introduced into the closed circuit 14.

The configuration and operation of the work vehicle according to the fourth embodiment other than those described above are the same as the foregoing third embodiment.

The fourth embodiment is able to achieve the same effects as the foregoing third embodiment. In addition, with the fourth embodiment, it is possible to apply a back pressure, which is greater than the hydraulic pressure in the other supply/discharge passage 14b, to the return oil from the work-related motor 52a with the back pressure generating device 82, and then return such return oil to the other supply/discharge passage 14b. Thus, the return oil from the work-related motor 52a can be reliably returned to the closed circuit 14. Consequently, it is possible to prevent the occurrence of cavitation in the closed circuit 14 caused by the amount of return oil from the work-related motor 52a being insufficient.

Moreover, with the fourth embodiment, since the hydraulic oil that is discharged from the charge pump can be introduced into the closed circuit after being filtered with the filter of the charge circuit, clean hydraulic oil can be supplied from the charge circuit to the closed circuit. Consequently, it is possible to prevent hydraulic oil containing foreign matter from being sent from the closed circuit 14 to the respective devices and, consequently, it is possible to prevent the respective devices from becoming damaged or malfunctioning.

### (Fifth Embodiment)

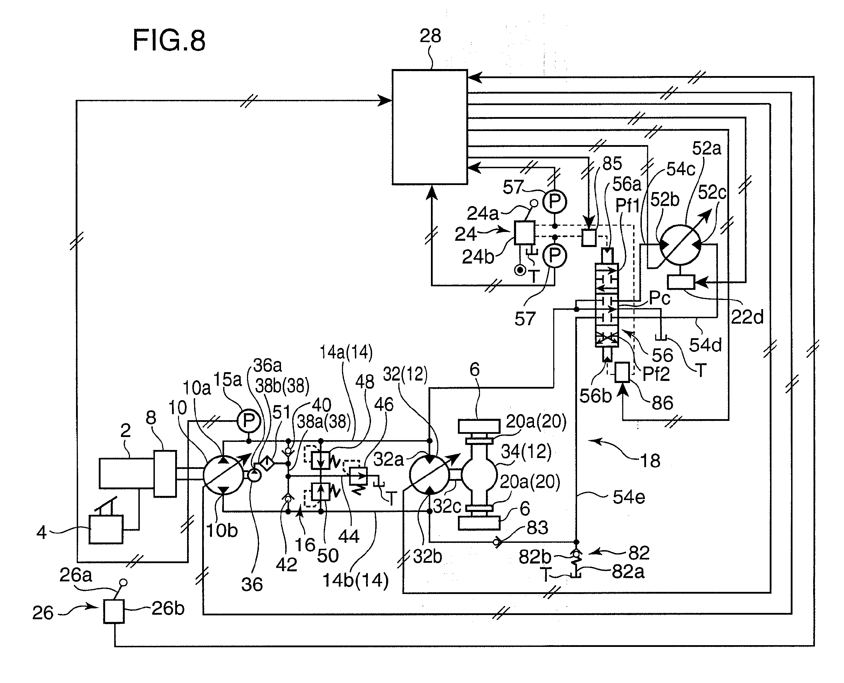

The configuration of the hydraulic work vehicle according to the fifth embodiment of the present invention is now explained with reference to Fig. 8.

With the work vehicle according to the fifth embodiment, the flow regulating valve 56 is controlled by the controller 28 causing the reducing valves 85, 86 to control the pilot pressure supplied to the flow regulating valve 56, and the supply or non-supply of the hydraulic oil to the work-related motor 52a is thereby switched. Specifically, with the fifth embodiment, the flow regulating valve 56 is covered by the concept of the hydraulic driving member switching unit of the present invention.

Specifically, the configuration of the work vehicle according to the fifth embodiment is a configuration where the switching valve 22a of one side is omitted from the work vehicle of the foregoing fourth embodiment, and adding a first reducing valve 85, a second reducing valve 86, and a work-related braking device 22d.

The first reducing valve 85 is provided to the supply path of the pilot pressure from the operating device body 24b to the port 56a of one side of the flow regulating valve 56. The second reducing valve 86 is provided to the supply path of the pilot pressure from the operating device body 24b to the port 56b of the other side of the flow regulating valve 56.

The controller 28 controls the first reducing valve 85 and the second reducing valve 86 according to the travel mode that was selected by the operator with the travel mode switching device 26. Specifically, when the operator selects the traveling state with the travel mode switching device 26 and a signal designating the traveling state is input from the travel mode switching device 26 into the controller 28, the controller 28 causes both reducing valves 85, 86 to depressurize the pilot pressure that is supplied from the operating device body 24b to the flow regulating valve 56 according to the input signal. Here, the controller 28 controls the level of depressurization by the first reducing valve 85 and the level of depressurization by the second reducing valve 86 so that the pilot pressure that is supplied from the operating device body 24b to the port 56a of one side and the pilot pressure that is supplied from the operating device body 24b to the port 56b of the other side will be an equal pressure. The flow regulating valve 56 will be forced to the neutral position P_{C} regardless of the operational status of the operating device 24. Consequently, since the flow of the hydraulic oil is blocked with the flow regulating valve 56 and the hydraulic oil is no longer supplied to the work-related motor 52a, the work-related motor 52a becomes non-drivable.

Meanwhile, when the operator selects the parked state with the travel mode switching device 26 and a signal designating the parked state is input from the travel mode switching device 26 into the controller 28, the controller 28 causes both reducing valves 85, 86 to discontinue the depressurization of the pilot pressure according to the input signal. The pilot pressure according to the operation of the operating lever 24a by the operation is supplied from the operating device body 24b to the respective ports 56a, 56b of the flow regulating valve 56. Consequently, as with the parked state in the foregoing fifth embodiment, the flow regulating valve 56 is switched among the neutral position P_{C} and the first flow position P_{f1} and the second flow position P_{f2} according to the operating direction and manipulated variable of the operating lever 24a. Since the flow regulating valve 56 is switched according to the operation of the operating lever 24a as described above, hydraulic oil according to the operation of the operating lever 24a can be supplied to the work-related motor 52a and, consequently, the work-related motor 52a becomes drivable when the work device is driven.

The configuration and operation of the work vehicle according to the fifth embodiment other than those described above are the same as the foregoing fourth embodiment.

The fifth embodiment is able to achieve the same effects as the foregoing third embodiment.

In addition, with the fifth embodiment, since the flow regulating valve 56 is able to regulate the flow rate of the hydraulic oil as well as switch between the supply and non-supply of the hydraulic oil to the work-related motor 52a, the number of components can be reduced in comparison to a case of separately providing the switching valve and the flow regulating valve.

### (Sixth Embodiment)

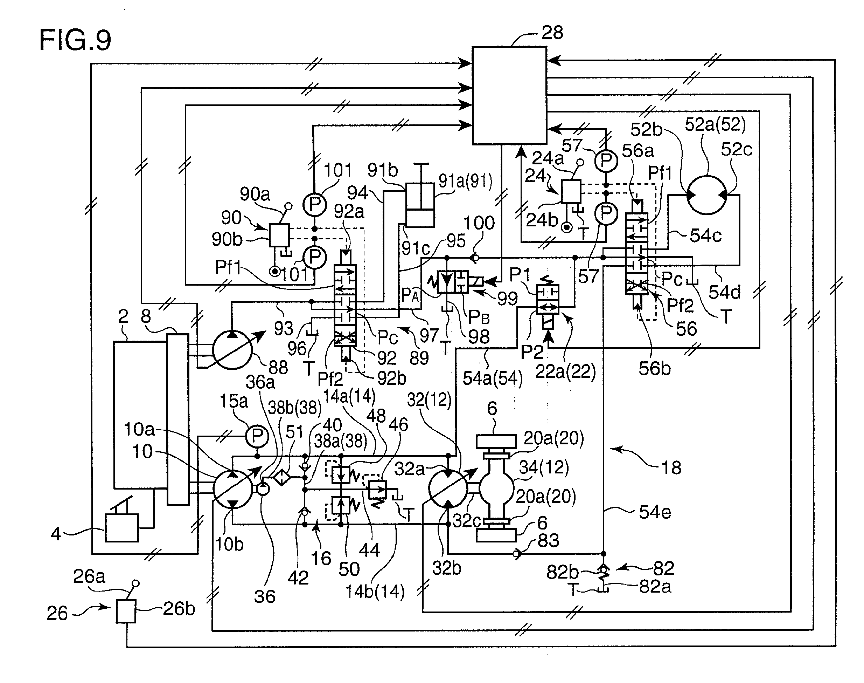

The configuration of the hydraulic work vehicle according to the sixth embodiment of the present invention is now explained with reference to Fig. 9.

The work vehicle according to the sixth embodiment is provided with a second work device (not shown) in addition to the first work device (not shown), and the amount of hydraulic oil that became a surplus (surplus oil) when supplied to the second work device can be supplied to the hydraulic driving member 52 of the first work device.

Specifically, the work vehicle according to the sixth embodiment is configured the same as the work vehicle of the foregoing fourth embodiment. The work device, the flow regulating valve 56, and the operating device 24 of the foregoing fourth embodiment correspond to the first work device, the first flow regulating valve 56, and the first operating device 24 in the sixth embodiment.

The work vehicle of the sixth embodiment additionally includes a second work device, a work-related hydraulic pump 88, a hydraulic oil circuit 89, and a second operating device 90.

The second work device is driven by hydraulic pressure, and is configured to perform predetermined work that is different from the first work device. The second work device includes a hydraulic driving member 91 that operates by being supplied with hydraulic pressure. The hydraulic driving member 91 is configured from a hydraulic cylinder 91a, and the second work device is operated when the hydraulic cylinder 91a is driven.

The work-related hydraulic pump 88 is driven by the engine 2 and discharges hydraulic oil. Specifically, the work-related hydraulic pump 88 is connected to the power divider 8. The driving force of the engine 2 is thereby distributed to the work-related hydraulic pump 88 by the power divider 8, and the work-related hydraulic pump 88 is consequently driven. Moreover, the work-related hydraulic pump 88 is a variable displacement-type hydraulic pump, and its capacity is controlled by the controller 28.

The hydraulic oil circuit 89 is configured to be capable of supplying the hydraulic oil that was discharged from the work-related hydraulic pump 88 to the hydraulic driving member 91 of the second work device. Specifically, the hydraulic oil circuit 89 includes a second flow regulating valve 92, a supply route 93, a supply/discharge passage 94 of one side, a supply/discharge passage 95 of another side, a tank discharge passage 96, a surplus oil passage 97, an escape passage 98, an unloading valve 99, and a check valve 100.

The configuration of the second flow regulating valve 92 is the same as the flow regulating valve 56 of the foregoing third embodiment.

One end of the supply route 93 is connected to a discharge opening of the work-related hydraulic pump 88, and another end of the supply route 93 is connected to the second flow regulating valve 92.

One end of the supply/discharge passage 94 of one side is connected to the second flow regulating valve 92, and the other end of the supply/discharge passage 94 of one side is connected to the inlet/outlet 91b of one side of the hydraulic cylinder 91a.

One end of the supply/discharge passage 95 of the other side is connected to the second flow regulating valve 92, and the other end of the supply/discharge passage 95 of the other side is connected to the inlet/outlet 91c of the other side of the hydraulic cylinder 91a.

One end of the tank discharge passage 96 is connected to the second flow regulating valve 92 and the other end of the tank discharge passage 96 is connected to the hydraulic oil tank T.

The surplus oil passage 97 is used for flowing, to the branch passage 54a of one side, hydraulic oil that is made surplus relative to an amount of the hydraulic oil supplied to the hydraulic driving member 91 of the second work device, of the hydraulic oil discharged from the work-related hydraulic pump 88. One end of the surplus oil passage 97 is connected to the second flow regulating valve 92, and the other end of the surplus oil passage 97 is connected to a part on the downstream side of the switching valve 22a of one side of the branch passage 54a of one side.

One end of the escape passage 98 is connected to the surplus oil passage 97, and the other end of the escape passage 98 is connected to the hydraulic oil tank T.

The unloading valve 99 is provided to the escape passage 98. The unloading valve 99 can be switched between a discharge permitting position P_{A} that permits the flow of the hydraulic oil to the hydraulic oil tank T side, and a discharge blocking position P_{B} that blocks the flow of such hydraulic oil. The unloading valve 99 is a solenoid valve that is switched by the controller 28.

The check valve 100 is provided to a part that is closer to the branch passage 54a of one side than the portion to which the escape passage 98 is connected of the surplus oil passage 97. The check valve 100 blocks the hydraulic oil from flowing backward from the branch passage 54a of one side to the second flow regulating valve 92 side through the surplus oil passage 97.

The configuration of the second operating device 90 is the same as the operating device 24 of the foregoing third embodiment. Incidentally, pressure sensors 101 are respectively connected to the supply path of the pilot pressure from the operating device body 90b of the second operating device 90 to the port 92a of one side of the second flow regulating valve 92, and the supply path of the pilot pressure from the operating device body 90b of the second operating device 90 to the port 92b of the other side of the second flow regulating valve 92. Both pressure sensors 101 respectively detect the pressure in the supply path to which they are connected, and send a signal showing the detected pressure to the controller 28.

With the work vehicle of the sixth embodiment, the work-related hydraulic pump 88 is operated when the engine 2 is driven, and hydraulic oil is thereby discharged from the work-related hydraulic pump 88 to the supply route 93. And the second flow regulating valve 92 is switched among the neutral position P_{C} and the first flow position P_{f1} and the second flow position P_{f2} according to the operation of the operating lever 90a of the second operating device 90 by the operator. The operation in the foregoing case is the same as the operation of the flow regulating valve 56 of the foregoing fifth embodiment.

In a state where the second flow regulating valve 92 is in the neutral position P_{C}, the flow of the hydraulic oil from the supply route 93 to the supply/discharge passage 94 of one side or the supply/discharge passage 95 of the other side is blocked, and the hydraulic oil flows from the supply route 93 to the surplus oil passage 97.

When the second flow regulating valve 92 moves from the state of the neutral position P_{C} to the first flow position P_{f1} side, the hydraulic oil flows from the supply route 93 to the supply/discharge passage 94 of one side and is supplied to the inlet/outlet 91b of one side of the hydraulic cylinder 91a. The hydraulic cylinder 91a is thereby operated, and the hydraulic oil is consequently discharged from the inlet/outlet 91c of the other side. The discharged hydraulic oil passes through the supply/discharge passage 95 of the other side and the tank discharge passage 96 and then flows to the hydraulic oil tank T. Here, the hydraulic oil (surplus oil) exceeding the flow rate that is restricted with the second flow regulating valve 92 of the hydraulic oil that was discharged from the work-related hydraulic pump 88 flows to the surplus oil passage 97.

Meanwhile, when the second flow regulating valve 92 moves from the state of the neutral position P_{C} to the second flow position P_{f2} side, the hydraulic oil flows from the supply route 93 to the supply/discharge passage 95 of the other side and is supplied to the inlet/outlet 91c of the other side of the hydraulic cylinder 91a. The hydraulic cylinder 91a is thereby operated, and the hydraulic oil is consequently discharged from the inlet/outlet 91b of one side. The discharged hydraulic oil passes through the tank discharge passage 96 and flows to the hydraulic oil tank T. In this case also, as with the case described previously, the hydraulic oil (surplus oil) exceeding the flow rate that is restricted with the second flow regulating valve 92 of the hydraulic oil that was discharged from the work-related hydraulic pump 88 flows to the surplus oil passage 97.

If the operator has selected the traveling state with the travel mode switching device 26, the controller 28 sets the unloading valve 99 to a discharge blocking position P_{B}. The hydraulic oil that flowed to the surplus oil passage 97 is thereby introduced into the branch passage 54a of one side without being released to the hydraulic oil tank T through the escape passage 98. Consequently, even if the operator selected the traveling state with the travel mode switching device 26 and the hydraulic oil is not supplied from the closed circuit 14 to the work-related motor 52a side through the branch passage 54a of one side, the work-related motor 52a becomes drivable with the hydraulic pressure of the hydraulic oil that is supplied through the surplus oil passage 97.

Meanwhile, if the operator selected the parked state with the travel mode switching device 26, the controller 28 sets the unloading valve 99 to a discharge permitting position P_{A}. The hydraulic oil that flowed to the surplus oil passage 97 will thereby flow to the hydraulic oil tank T through the escape passage 98.

As explained above, with the sixth embodiment, the second work device can be driven by supplying the hydraulic oil from the work-related hydraulic pump 88 to the hydraulic cylinder 91a of the second work device. Thus, in addition to the work to be performed by the first work device, work that is different from the foregoing work can be performed by the second work device in the work vehicle.

Moreover, with the sixth embodiment, even in a case where the switching valve 22a of one side is in the state of the first position P1 and the flow of the hydraulic oil from the closed circuit 14 to the work-related motor 52a through the branch passage 54a of one side is blocked when the work vehicle is in a traveling state, it is possible to supply the surplus oil to the work-related motor 52a and drive the work-related motor 52a. Accordingly, with the sixth embodiment, the travel of the work vehicle and the drive of the first work device and second work device can be simultaneously performed.

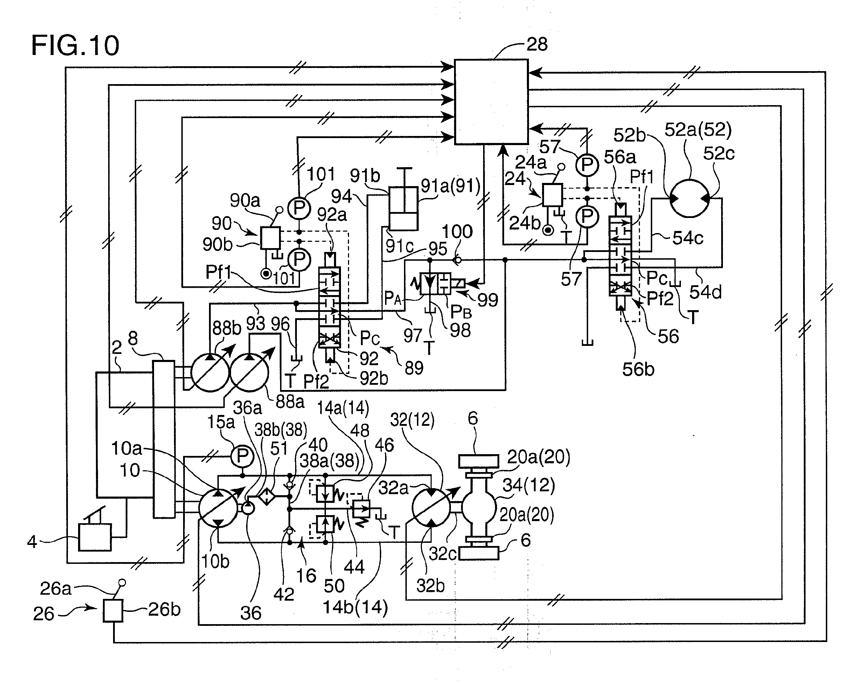

Incidentally, as shown with the comparative example of Fig. 10, it is also possible to separately provide a hydraulic pump 88a for supplying the hydraulic oil to the work-related motor 52a of the first work device, and a hydraulic pump 88b for supplying the hydraulic oil to the hydraulic cylinder 91a of the second work device. Nevertheless, in the foregoing case, there is a problem in that the configuration of the work vehicle becomes complicated. In addition, since the hydraulic pump 88a for supplying the hydraulic oil to the work-related motor 52a will idle when the work vehicle is in a traveling state, the fuel consumption will deteriorate. With the sixth embodiment, a single work-related hydraulic pump is able to supply the hydraulic oil to both the hydraulic cylinder 91a of the second work device and the work-related motor 52a of the first work device when the work vehicle is in a traveling state. Thus, the configuration of the work vehicle can be simplified. Moreover, with the sixth embodiment, it is possible to prevent the idling of the hydraulic pump 88a for supplying the hydraulic oil to the work-related motor 52a and, consequently, it is possible to prevent the deterioration of the fuel consumption.

### (Seventh Embodiment)

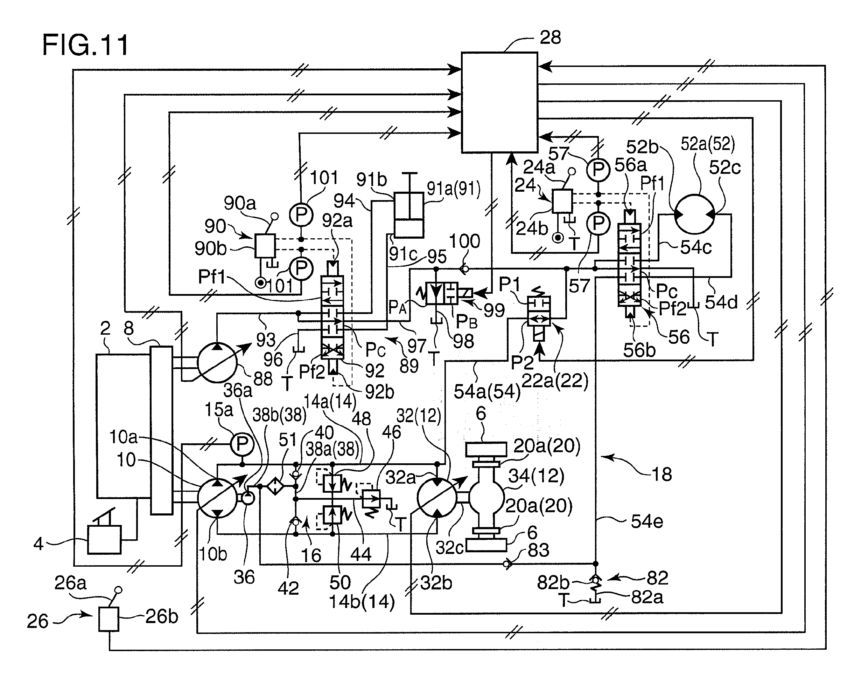

The configuration of the hydraulic work vehicle according to the seventh embodiment of the present invention is now explained with reference to Fig. 11.

With the work vehicle of the seventh embodiment, the return oil from the work-related motor 52a is introduced to a part between the charge pump 36 and the filter 51 of the charge circuit 16.

Specifically, with the seventh embodiment, an end on the opposite side of the first flow regulating valve 56 of the work-related return oil passage 54e is connected to a part between the charge pump 36 and the filter 51 of the discharge passage 38b of the charge oil passage 38.

A back pressure generating device 82 is connected to the work-related return oil passage 54e, and, based on this back pressure generating device 82, the back pressure that is applied to the return oil flowing through the work-related return oil passage 54e becomes a back pressure that is greater than the setting pressure of the charge circuit 16. Specifically, the setting pressure of the back pressure check valve 82b is greater than the pressure that is applied to the hydraulic oil in the charge circuit 16.

According to this configuration, with the seventh embodiment, since the return oil from the work-related motor 52a can be returned to the closed circuit 14 after being filtered with the filter 51 of the charge circuit 16, the return oil from the work-related motor 52a can be returned to the closed circuit 14 in a clean state. Accordingly, with the seventh embodiment, it is possible to prevent hydraulic oil containing foreign matter from being sent from the closed circuit 14 to the respective devices and, consequently, it is possible to prevent the respective devices from becoming damaged or malfunctioning.

Moreover, with the seventh embodiment, since the return oil from the work-related motor 52a can be filtered with the filter 51 of the charge circuit 16, the configuration can be simplified in comparison to the configuration providing a filter for filtering the return oil from the work-related motor 52a separately from the filter 51 of the charge circuit 16.

Moreover, with the seventh embodiment, the back pressure generating device 82 can be used to apply a back pressure to the return oil from the work-related motor 52a that is greater than the setting pressure of the charge circuit 16, and thereby introduce the return oil to the charge circuit 16. Thus, it is possible to reliably introduce the return oil from the work-related motor 52a to the charge circuit 16, and it is further possible to reliably introduce such return oil from the charge circuit 16 to the closed circuit 14. Consequently, it is possible to prevent the occurrence of cavitation in the closed circuit 14 caused by the amount of return oil from the work-related motor 52a being insufficient.

Incidentally, the embodiments disclosed above are mere examples in all respects, and should not be considered as limitations. The scope of this invention is not defined by the explanation of the foregoing embodiments, but rather by the ensuing scope of claims, and also covers all modifications within the meaning and scope that are equivalent to the scope of claims of the present invention.

For example, the hydraulic driving member switching unit 22 may also be a work-related motor capacity regulating unit (not shown) that is provided to the work-related motor 52a. The work-related motor capacity regulating unit is used for regulating the capacity of the work-related motor 52a.

In the foregoing case, when the operator selects the traveling state with the travel mode switching device 26 and a signal designating the traveling state is input from the travel mode switching device 26 into the controller 28, the controller 28 controls the work-related motor capacity regulating unit to cause the capacity of the work-related motor 52a to be 0. The work-related motor 52a thereby becomes non-drivable. Moreover, since hardly any hydraulic oil will flow to the work-related motor 52a from the branch passage 54a of one side or the branch passage 54b of the other side, approximately the entire amount of the hydraulic oil that was discharged from the hydraulic pump 10 to the closed circuit 14 is supplied to the travel motor 32. Consequently, the travel motor 32 is driven.

Meanwhile, when the operator selects the parked state with the travel mode switching device 26 and a signal designating the parked state is input from the travel mode switching device 26 into the controller 28, the controller 28 controls the work-related motor capacity regulating unit to cause the capacity of the work-related motor 52a to be a predetermined capacity that is greater than 0. The work-related motor 52a thereby becomes drivable. Moreover, the hydraulic oil flows into the work-related motor 52a and the work-related motor 52a is driven.

With this kind of configuration, the configuration of the work vehicle can be simplified in comparison to the configuration of switching the work-related motor 52a between a drivable state and a non-drivable state by providing a switching valve for switching between the supply and non-supply of the hydraulic oil to the work-related motor 52a or a braking device for applying a brake to the work-related motor 52a.

Moreover, the wheel drive unit switching unit 20 may be a travel-related motor capacity regulating unit (not shown) that is provided to the travel motor 32. The travel-related motor capacity regulating unit is used for regulating the capacity of the travel motor 32.

In the foregoing case, when the operator selects the parked state with the travel mode switching device 26 and a signal designating the parked state is input from the travel mode switching device 26 into the controller 28, the controller 28 controls the travel-related motor capacity regulating unit to cause the capacity of the travel motor 32 to be 0. The travel motor 32 thereby becomes non-drivable. Moreover, since hardly any hydraulic oil will flow from the closed circuit 14 to the travel motor 32, approximately the entire amount of the hydraulic oil that was discharged from the hydraulic pump 10 to the closed circuit 14 is supplied to the work-related motor 52a. Consequently, the work-related motor 52a is driven.

Meanwhile, when the operator selects the traveling state with the travel mode switching device 26 and a signal designating the traveling state is input from the travel mode switching device 26 into the controller 28, the controller 28 controls the travel-related motor capacity regulating unit to cause the capacity of the travel motor 32 to be a predetermined capacity that is greater than 0. The travel motor 32 thereby becomes drivable, the hydraulic oil flows from the closed circuit to the travel motor 32, and the travel motor 32 is thereby driven.

### [Summary of Embodiments]

The embodiments and the modified examples can be summarized as follows.

Specifically, the hydraulic work vehicle according to the embodiments and the modified examples includes an engine, wheels, a first work device capable of performing predetermined work, a hydraulic pump that is driven by the engine and discharges hydraulic oil, a wheel drive unit that is driven by hydraulic pressure of hydraulic oil supplied from the hydraulic pump to rotate the wheel, a closed circuit that connects the hydraulic pump and the wheel drive unit and circulates hydraulic oil between the hydraulic pump and the wheel drive unit, a work device drive circuit that includes a hydraulic driving member for driving the first work device and is branched from the closed circuit so that hydraulic oil for driving the hydraulic driving member can flow in the work device drive circuit from the closed circuit, a wheel drive unit switching unit that is provided to the wheel drive unit and capable of switching the wheel drive unit between a wheel driving state and a wheel non-driving state, a hydraulic driving member switching unit that is provided to the work device drive circuit and capable of switching the hydraulic driving member between a work device driving state and a work device non-driving state, and a control unit for controlling the wheel drive unit switching unit to cause the wheel drive unit to be in the wheel driving state and controlling the hydraulic driving member switching unit to cause the hydraulic driving member to be in the work device non-driving state when the hydraulic work vehicle is in a traveling state, and controlling the wheel drive unit switching unit to cause the wheel drive unit to be in the wheel non-driving state and controlling the hydraulic driving member switching unit to cause the hydraulic driving member to be in the work device driving state when the first work device is driven.

This hydraulic work vehicle includes a wheel drive unit that is driven by hydraulic pressure of hydraulic oil supplied from the hydraulic pump through the closed circuit and rotates the wheel, and a work device drive circuit that includes a hydraulic driving member for driving the first work device and is branched from the closed circuit so that hydraulic oil can flow in from the closed circuit. When this hydraulic work vehicle is to travel, the control unit controls the wheel drive unit switching unit to cause the wheel drive unit to be in the wheel drivinge state, and controls the hydraulic driving member switching unit to cause the hydraulic driving member to be in the work device non-driving state. Accordingly, when the work vehicle is to travel, such work vehicle can travel by driving the wheel drive unit with hydraulic pressure of hydraulic oil that is supplied from the hydraulic pump and thereby rotating the wheel. In addition, with this hydraulic work vehicle, when the first work device is to be driven, the control unit controls the wheel drive unit switching unit to cause the wheel drive unit to be in the wheel non-driving state and controls the hydraulic driving member switching unit to cause the hydraulic driving member to be in the work device driving state. Thus, when the first work device is to be driven, the hydraulic driving member is driven with the hydraulic pressure of the hydraulic oil that is supplied from the hydraulic pump, and the first work device can thereby be driven by the hydraulic driving member. Accordingly, with this hydraulic work vehicle, the work vehicle can travel based on hydraulic pressure and the first work device can be hydraulically driven.

Moreover, with this hydraulic work vehicle, while the hydraulic oil can be supplied from the hydraulic pump to the wheel drive unit through the closed circuit on the one hand, the hydraulic oil can also be supplied to the hydraulic driving member by causing the hydraulic oil to flow into the work device drive circuit from the hydraulic pump via the closed circuit. Specifically, a single hydraulic pump is able to supply the hydraulic oil to both the wheel drive unit and the hydraulic driving member of the work device drive circuit. Thus, unlike the conventional configuration where a hydraulic pump for supplying hydraulic oil to the travel-related hydraulic motor and a hydraulic pump for supplying hydraulic oil to the work device are separately provided and both hydraulic pumps being simultaneously driven by the engine, this hydraulic work vehicle is able to prevent the deterioration of fuel consumption caused by the idling of the hydraulic pump for supplying the hydraulic oil to the work device when the work vehicle is in a traveling state.

Incidentally, if the switching control valve for respectively switching the wheel drive unit and the hydraulic driving member between a drivable state and a non-drivable state by switching whether to supply the hydraulic oil, which is discharged from the hydraulic pump to the closed circuit, to the wheel drive unit or the hydraulic driving member is provided to the closed circuit, the hydraulic oil is supplied to the wheel drive unit through the switching control valve provided to the closed circuit when the work vehicle is in a traveling state. In the foregoing case, pressure loss will occur as a result of the hydraulic oil passing through the switching control valve. Meanwhile, with the foregoing hydraulic work vehicle, since the hydraulic driving member switching unit is provided to the work device drive circuit, even if the hydraulic driving member switching unit is a switching control valve that switches the flow of the hydraulic oil, the hydraulic oil will not flow by passing through the switching control valve provided to the work device drive circuit when the hydraulic oil is to be supplied to the wheel drive unit through the closed circuit when the work vehicle is in a traveling state. Thus, it is possible to prevent the occurrence of pressure loss caused by the hydraulic oil passing through the switching control valve provided to the closed circuit when the work vehicle is in a traveling state and, consequently, it is possible to prevent the deterioration of fuel consumption caused by such pressure loss.

Accordingly, with this hydraulic work vehicle, it is possible to prevent the deterioration of fuel consumption during the travel of the work vehicle while enabling the work vehicle to travel based on hydraulic pressure and the first work device to be hydraulically driven.

In the foregoing hydraulic work vehicle, the work device drive circuit may include a work-related supply route that branches from the closed circuit so as to lead hydraulic oil supplied from the closed circuit to the hydraulic driving member, the hydraulic driving member switching unit may be a switching valve that is provided to the work-related supply route and capable of being switched between a first position of blocking hydraulic oil from flowing from the closed circuit to the hydraulic driving member through the work-related supply route, and a second position of allowing hydraulic oil to flow from the closed circuit to the hydraulic driving member through the work-related supply route, and the control unit may cause the switching valve to be in the first position when the hydraulic work vehicle is in a traveling state and cause the switching valve to be in the second position when the first work device is driven.

According to this configuration, since the control unit causes the switching value to be in the first position when the work vehicle is in a traveling state, the hydraulic oil will not be supplied to the hydraulic driving member. Consequently, the hydraulic driving member becomes non-drivable. Meanwhile, since the control unit causes the switching valve to be in the second position when the first work device is driven, the hydraulic oil is supplied to the hydraulic driving member. Consequently, the hydraulic driving member becomes drivable. Thus, according to this configuration, it is possible to configure a specific mechanism for causing the hydraulic driving member to be in a non-drivable state when the work vehicle is in a traveling state and causing the hydraulic driving member to be in a drivable state when the first work device is driven.

In the foregoing case, preferably, the hydraulic work vehicle further includes an operating device that is operated for designating an operation of the first work device, and a flow regulating valve that is provided to the work-related supply route and capable of regulating a flow rate of hydraulic oil, wherein the control unit controls a flow rate of hydraulic oil supplied to the hydraulic driving member by controlling a flow tolerance of hydraulic oil by the flow regulating valve according to a manipulated variable of the operating device.

According to this configuration, since the flow rate of the hydraulic oil that is supplied to the hydraulic driving member can be controlled according to the manipulated variable of the operating device operated by the operator, it is possible to control the drive speed and the like of the first work device according to the manipulated variable of the operating device operated by the operator. Incidentally, in order to control the flow rate of the hydraulic oil supplied to the hydraulic driving member, it is also possible to use a variable displacement-type hydraulic pump and control the capacity of the hydraulic pump according to the manipulated variable of the operating device. Nevertheless, since a hydraulic pump is not good with detailed capacity control, if the manipulated variable of the operating device is minimal, it may not be possible to accurately regulate the flow rate of the hydraulic oil supplied to the hydraulic driving member according to the minimal operation of the operating device. Moreover, the capacity control of a hydraulic pump entails a problem in that the responsiveness is inferior in relation to the sudden operation of the operating device. Meanwhile, a flow regulating valve is suitable for the detailed flow rate control of hydraulic oil in comparison to a hydraulic pump, and also has superior responsiveness. Thus, when the control unit causes the flow regulating valve to control the flow rate of the hydraulic oil supplied to the hydraulic driving member according to the manipulated variable of the operating device as with the present configuration, it is possible to accurately regulate the flow rate of the hydraulic oil supplied to the hydraulic driving member according to the minimal operation of the operating device even if the manipulated variable of the operating device is minimal, and improve the responsiveness of regulating the flow rate of the hydraulic oil supplied to the hydraulic driving member in relation to the operation of the operating device.

In the configuration where the foregoing hydraulic driving member switching unit is a switching valve that is provided to the work-related supply route, preferably, the hydraulic work vehicle further includes an operating device that is operated by an operator for designating an operation of the first work device, wherein the switching valve is configured to be capable of regulating a flow rate of hydraulic oil that flows through the switching valve, and the control unit controls a flow rate of hydraulic oil supplied to the hydraulic driving member by controlling a flow tolerance of hydraulic oil of the switching valve according to a manipulated variable of the operating device operated by the operator.

According to this configuration, since the flow rate of the hydraulic oil that is supplied to the hydraulic driving member can be controlled according to the manipulated variable of the operating device operated by the operator, it is possible to control the drive speed and the like of the first work device according to the manipulated variable of the operating device operated by the operator. Incidentally, if the switching value provided to the work-related supply route is equipped with a function for regulating the flow rate of the hydraulic oil as in the present configuration, as with the case of using the foregoing flow regulating valve, it is possible to accurately regulate the flow rate of the hydraulic oil supplied to the hydraulic driving member according to the minimal operation of the operating device even if the manipulated variable of the operating device is minimal, and improve the responsiveness of regulating the flow rate of the hydraulic oil supplied to the hydraulic driving member in relation to the operation of the operating device. In addition, with the present configuration, since the switching valve also functions as the flow regulating valve for regulating the flow rate of the hydraulic oil to the hydraulic driving member, the number of components can be reduced in comparison to a case of separately providing the switching valve and the flow regulating valve.

In the configuration where the foregoing work device drive circuit includes a work-related supply route that is capable of supplying hydraulic oil to the hydraulic driving member, preferably, the hydraulic work vehicle further includes a second work device that is driven by hydraulic pressure to perform predetermined work, a work-related hydraulic pump that is driven by the engine to discharge hydraulic oil, and a hydraulic oil circuit that is capable of supplying hydraulic oil discharged from the work-related hydraulic pump to the second work device, wherein the hydraulic oil circuit includes a surplus oil passage that leads, to the work-related supply route, hydraulic oil that is made surplus relative to an amount of the hydraulic oil supplied to the second work device, of the hydraulic oil discharged from the work-related hydraulic pump, and the surplus oil passage is connected to the work-related supply route at a position downstream of the switching valve in a flow direction of hydraulic oil.

According to this configuration, the hydraulic oil can be supplied from the work-related hydraulic pump to the second work device to drive the second work device. Thus, in addition to the work to be performed by the first work device, work that is different from the foregoing work can be performed by the second work device in the work vehicle. Moreover, with this configuration, the surplus oil passage for flowing hydraulic oil that is surplus relative to an amount of the hydraulic oil supplied to the second work device, of the hydraulic oil discharged from the work-related hydraulic pump, is connected to a position in the work-related supply route, on a downstream side of the switching value in a flow direction of hydraulic oil. Thus, even in a case where the switching valve is in the first position and the flow of the hydraulic oil from the closed circuit to the hydraulic driving member through the work-related supply route is blocked when the work vehicle is in a traveling state, it is possible to flow the surplus oil to the work-related supply route through the surplus oil passage and further supply such surplus oil from the work-related supply route to the hydraulic driving member to drive the hydraulic driving member. Accordingly, with the present configuration, the travel of the work vehicle and the drive of the first work device and second work device can be simultaneously performed.

In the foregoing hydraulic work vehicle, the hydraulic driving member may be a work-related hydraulic motor for driving the first work device, the hydraulic driving member switching unit may be a work-related braking device that is attached to the work-related hydraulic motor and capable of applying a brake to the work-related hydraulic motor, and the control unit may cause the work-related braking device to apply a brake to the work-related hydraulic motor when the hydraulic work vehicle is in a traveling state and cause the work-related braking device to release the brake applied to the work-related hydraulic motor when the first work device is driven.

According to this configuration, since the control unit causes the work-related braking device to apply a brake to the work-related hydraulic motor when the work vehicle is in a traveling state, the work-related hydraulic motor becomes non-drivable. Meanwhile, since the control unit causes the work-related braking device to release the brake applied to the work-related hydraulic motor when the first work device is driven, the work-related hydraulic motor becomes drivable. Thus, according to this configuration, it is possible to configure a specific mechanism of causing the hydraulic driving member to be in a non-drivable state when the work vehicle is in a traveling state and causing the hydraulic driving member to be in a drivable state when the first work device is driven.

In the foregoing hydraulic work vehicle, the hydraulic driving member may be a variable displacement-type work-related hydraulic motor for driving the first work device, the hydraulic driving member switching unit may be a work-related motor capacity regulating unit that is provided to the work-related hydraulic motor and capable of regulating capacity of the work-related hydraulic motor, and the control unit may cause the work-related motor capacity regulating unit to set the capacity of the work-related hydraulic motor to 0 when the hydraulic work vehicle is in a traveling state and cause the work-related motor capacity regulating unit to set the capacity of the work-related hydraulic motor to be a specific capacity that is greater than 0 when the first work device is driven.

According to this configuration, since the control unit controls the work-related motor capacity regulating unit to cause the capacity of the work-related hydraulic motor to be 0 when the work vehicle is in a traveling state, the work-related hydraulic motor becomes non-drivable. Meanwhile, since the control unit controls the work-related motor capacity regulating unit to cause the capacity of the work-related hydraulic motor to be a specific capacity that is greater than 0 when the first work device is driven, the work-related hydraulic motor becomes drivable. Thus, according to this configuration, it is possible to configure a specific mechanism of causing the hydraulic driving member to be in a non-drivable state when the work vehicle is in a traveling state, and causing the hydraulic driving member to be in a drivable state when the first work device is driven. Moreover, with this configuration, the configuration can be simplified in comparison to the configuration of switching the work-related hydraulic motor between a drivable state and a non-drivable state by providing a switching valve for switching between the supply and non-supply of the hydraulic oil to the work-related hydraulic motor or a braking device for applying a brake to the work-related hydraulic motor.

In the foregoing hydraulic work vehicle, the wheel drive unit may include a travel-related hydraulic motor that is connected to the closed circuit and generates driving force for rotating the wheel as a result of being supplied with hydraulic oil through the closed circuit, the wheel drive unit switching unit may be a travel-related braking device that is capable of applying a brake to the travel-related hydraulic motor, and the control unit may cause the travel-related braking device to apply a brake to the travel-related hydraulic motor when the first work device is driven and cause the travel-related braking device to release the brake applied to the travel-related hydraulic motor when the hydraulic work vehicle is in a traveling state.

According to this configuration, since the control unit causes the travel-related braking device to apply a brake to the travel-related hydraulic motor when the first work device is driven, the travel-related hydraulic motor becomes non-drivable. Meanwhile, since the control unit causes the travel-related braking device to release the brake applied to the travel-related hydraulic motor when the work vehicle is in a traveling state, the travel-related hydraulic motor becomes drivable. Thus, according to this configuration, it is possible to configure a specific mechanism of causing the wheel drive unit to be in a drivable state when the work vehicle is in a traveling state and causing the wheel drive unit to be in a non-drivable state when the first work device is driven.

In the foregoing hydraulic work vehicle, the wheel drive unit may include a variable displacement-type travel-related hydraulic motor that is connected to the closed circuit and generates driving force for rotating the wheel as a result of being supplied with hydraulic oil through the closed circuit, the wheel drive unit switching unit may be a travel-related motor capacity regulating unit that is provided to the travel-related hydraulic motor and capable of regulating capacity of the travel-related hydraulic motor, and the control unit may cause the travel-related motor capacity regulating unit to set the capacity of the travel-related hydraulic motor to 0 when the first work device is driven and causes the travel-related motor capacity regulating unit to set the capacity of the travel-related hydraulic motor to a specific capacity that is greater than 0 when the hydraulic work vehicle is in a traveling state.

According to this configuration, since the control unit controls the travel-related motor capacity regulating unit to cause the capacity of the travel-related hydraulic motor to be 0 when the first work device is driven, the travel-related hydraulic motor becomes non-drivable. Meanwhile, since the control unit controls the travel-related motor capacity regulating unit to cause the capacity of the travel-related hydraulic motor to be a specific capacity that is greater than 0 when the work vehicle is in a traveling state, the travel-related hydraulic motor becomes drivable. Thus, according to this configuration, it is possible to configure a specific mechanism of causing the wheel drive unit to be in a drivable state when the work vehicle is in a traveling state and causing the wheel drive unit to be in a non-drivable state when the first work device is driven.

In the foregoing hydraulic work vehicle, preferably, the hydraulic work vehicle further includes an operating device that is operated by an operator for designating an operation of the first work device, wherein the hydraulic pump is a variable displacement-type, and when the hydraulic work vehicle is in a traveling state, the control unit performs first capacity control of controlling capacity of the hydraulic pump so that power required for driving the hydraulic pump does not exceed an output of the engine, and when the first work device is driven, the control unit selects and performs the first capacity control or second capacity control of increasing or decreasing the capacity of the hydraulic pump according to increase or decrease of a manipulated variable of the operating device operated by the operator, whichever results in a lower discharge pressure of the hydraulic pump.

The engine will stop if the power that is required for driving the hydraulic pump when the work vehicle is in a traveling state exceeds the output of the engine. However, with this configuration, since the capacity of the hydraulic pump is controlled so that the power that is required for driving the hydraulic pump when the work vehicle is in a traveling state does not exceed the output of the engine, it is possible to prevent the engine from stopping. Moreover, with this configuration, when the first work device is driven, the first capacity control of the hydraulic pump for preventing the power required for driving the hydraulic pump from exceeding the output of the engine or the second capacity control of increasing or decreasing capacity of the hydraulic pump according to increase or decrease of a manipulated variable of the operating device operated by the operator is selected, whichever results in a lower discharge pressure of the hydraulic pump. Thus, if the discharge pressure of the hydraulic pump will be lower with the second capacity control in comparison to the first capacity control when the first work device is driven, the capacity of the hydraulic pump is increased or decreased according to the increase or decrease of the manipulated variable of the operating device operated by the operator, and it is thereby possible to prevent the capacity of the hydraulic pump from becoming an excessively large capacity in relation to the manipulated variable. Since it is thereby possible to prevent the power required for driving the hydraulic pump from becoming unnecessarily large as a result of the capacity of the hydraulic pump from becoming excessive in relation to the manipulated variable, it is possible to improve the fuel consumption. Moreover, if the discharge pressure of the hydraulic pump will be lower with the first capacity control in comparison to the second capacity control when the first work device is driven, since the capacity of the hydraulic pump is controlled so that the power required for driving the hydraulic pump does not exceed the output of the engine, as with the case when the work vehicle is in a traveling state as described above, it is possible to prevent the engine from stopping.

Preferably, the foregoing hydraulic work vehicle further includes a charge circuit that is capable of introducing hydraulic oil to the closed circuit at a predetermined setting pressure, wherein the work device drive circuit includes a work-related return oil passage that is capable of introducing return oil from the hydraulic driving member to the charge circuit, and a back pressure generating device that is provided to the work-related return oil passage and generates a back pressure that is greater than the predetermined setting pressure in return oil flowing through the work-related return oil passage.

According to this configuration, it is possible to prevent the occurrence of cavitation in the closed circuit. Specifically, while the hydraulic oil is circulating between the hydraulic pump and the wheel drive unit through the closed circuit, there are cases where a minor leak of the hydraulic oil will occur. In the foregoing case, cavitation may occur in the closed circuit. Meanwhile, with this configuration, since a charge circuit capable of introducing the hydraulic oil to the closed circuit at a predetermined setting pressure is provided, the amount of the leaked hydraulic oil can be compensated by supplying hydraulic oil from the charge circuit to the closed circuit. Thus, it is possible to prevent the occurrence of cavitation in the closed circuit caused by the leak of the hydraulic oil. In addition, if the amount of return oil from the hydraulic driving member of the work device drive circuit to the closed circuit is insufficient, the amount of hydraulic oil circulating in the closed circuit may become insufficient and cause cavitation in the closed circuit. Meanwhile, with this configuration, since a work-related return oil passage capable of introducing the return oil from the hydraulic driving member to the charge circuit is provided, and a back pressure generating device that generates back pressure to the hydraulic oil flowing through the work-related return oil passage that is greater than the setting pressure that is applied to the hydraulic oil in the charge circuit, the return oil from the hydraulic driving member can be reliably returned to the closed circuit from the work-related return oil passage through the charge circuit. Thus, it is possible to prevent the occurrence of cavitation in the closed circuit caused by the amount of return oil from the hydraulic driving member to the closed circuit being insufficient.

In the foregoing case, preferably, the charge circuit includes a charge pump that is driven by the engine and discharges hydraulic oil, a charge oil passage that connects a discharge opening of the charge pump and the closed circuit, and a filter that is provided to the charge oil passage and used for filtering hydraulic oil flowing through the charge oil passage, and the work-related return oil passage is connected to a part between the charge pump and the filter, of the charge oil passage.

According to this configuration, the hydraulic oil that is discharged from the charge pump can be introduced into the closed circuit after being filtered with the filter of the charge circuit. Thus, clean hydraulic oil can be supplied from the charge circuit to the closed circuit. Moreover, with this configuration, since the work-related return oil passage is connected to a part between the charge pump and the filter, of the charge oil passage, the return oil from the hydraulic driving member can be returned to the closed circuit after being filtered with the filter of the charge circuit. Thus, the return oil from the hydraulic driving member can be returned to the closed circuit in a clean state. Accordingly, with this configuration, it is possible to prevent hydraulic oil containing foreign matter from being sent from the closed circuit to the respective devices and, consequently, it is possible to prevent the respective devices from becoming damaged or malfunctioning. Moreover, with this configuration, since the return oil from the hydraulic driving member can be filtered with the filter of the charge circuit, the configuration can be simplified in comparison to the configuration providing a filter for filtering the return oil from the hydraulic driving member separately from the filter of the charge circuit.

As explained above, according to the embodiments and the modified examples, it is possible to prevent the deterioration of fuel consumption in the hydraulic work vehicle when the work vehicle is in a traveling state while enabling the work vehicle to travel based on hydraulic pressure and the work device to be hydraulically driven.

The hydraulic work vehicle of the present invention includes: an engine; wheels; a first work device capable of performing predetermined work; a hydraulic pump that is driven by the engine and discharges hydraulic oil; a wheel drive unit that is driven by hydraulic pressure of hydraulic oil supplied from the hydraulic pump to rotate the wheel; a closed circuit that connects the hydraulic pump and the wheel drive unit and circulates hydraulic oil between the hydraulic pump and the wheel drive unit; a work device drive circuit that includes a hydraulic driving member for driving the first work device and is branched from the closed circuit so that hydraulic oil for driving the hydraulic driving member can flow in the work device drive circuit from the closed circuit; a wheel drive unit switching unit that is provided to the wheel drive unit and capable of switching the wheel drive unit between a wheel driving state and a wheel non-driving state; a hydraulic driving member switching unit that is provided to the work device drive circuit and capable of switching the hydraulic driving member between a work device driving state and a work device non-driving state; and a control unit for controlling the wheel drive unit switching unit to cause the wheel drive unit to be in the wheel driving state and controlling the hydraulic driving member switching unit to cause the hydraulic driving member to be in the work device non-driving state when the hydraulic work vehicle is in a traveling state, and controlling the wheel drive unit switching unit to cause the wheel drive unit to be in the wheel non-driving state and controlling the hydraulic driving member switching unit to cause the hydraulic driving member to be in the work device driving state when the first work device is driven.

## Claims

1. A hydraulic work vehicle, comprising:
an engine;
wheels;
a first work device capable of performing predetermined work;
a hydraulic pump that is driven by the engine and discharges hydraulic oil;
a wheel drive unit that is driven by hydraulic pressure of hydraulic oil supplied from the hydraulic pump to rotate the wheel;
a closed circuit that connects the hydraulic pump and the wheel drive unit and circulates hydraulic oil between the hydraulic pump and the wheel drive unit;
a work device drive circuit that includes a hydraulic driving member for driving the first work device and is branched from the closed circuit so that hydraulic oil for driving the hydraulic driving member can flow in the work device drive circuit from the closed circuit;
a wheel drive unit switching unit that is provided to the wheel drive unit and capable of switching the wheel drive unit between a wheel driving state and a wheel non-driving state;
a hydraulic driving member switching unit that is provided to the work device drive circuit and capable of switching the hydraulic driving member between a work device driving state and a work device non-driving state; and
a control unit for controlling the wheel drive unit switching unit to cause the wheel drive unit to be in the wheel driving state and controlling the hydraulic driving member switching unit to cause the hydraulic driving member to be in the work device non-driving state when the hydraulic work vehicle is in a traveling state, and controlling the wheel drive unit switching unit to cause the wheel drive unit to be in the wheel non-driving state and controlling the hydraulic driving member switching unit to cause the hydraulic driving member to be in the work device driving state when the first work device is driven.

2. The hydraulic work vehicle according to claim 1,
wherin the work device drive circuit includes a work-related supply route that branches from the closed circuit so as to lead hydraulic oil supplied from the closed circuit to the hydraulic driving member,
the hydraulic driving member switching unit is a switching valve that is provided to the work-related supply route and capable of being switched between a first position of blocking hydraulic oil from flowing from the closed circuit to the hydraulic driving member through the work-related supply route, and a second position of allowing hydraulic oil to flow from the closed circuit to the hydraulic driving member through the work-related supply route, and
the control unit causes the switching valve to be in the first position when the hydraulic work vehicle is in a traveling state and causes the switching valve to be in the second position when the first work device is driven.

3. The hydraulic work vehicle according to claim 2, further comprising:
an operating device that is operated for designating an operation of the first work device; and
a flow regulating valve that is provided to the work-related supply route and capable of regulating a flow rate of hydraulic oil,
wherein the control unit controls a flow rate of hydraulic oil supplied to the hydraulic driving member by controlling a flow tolerance of hydraulic oil by the flow regulating valve according to a manipulated variable of the operating device.

4. The hydraulic work vehicle according to claim 2, further comprising:
an operating device that is operated by an operator for designating an operation of the first work device,
wherein the switching valve is configured to be capable of regulating a flow rate of hydraulic oil that flows through the switching valve, and
the control unit controls a flow rate of hydraulic oil supplied to the hydraulic driving member by controlling a flow tolerance of hydraulic oil of the switching valve according to a manipulated variable of the operating device operated by the operator.

5. The hydraulic work vehicle according to claim 2, further comprising:
a second work device that is driven by hydraulic pressure to perform predetermined work;
a work-related hydraulic pump that is driven by the engine to discharge hydraulic oil; and
a hydraulic oil circuit that is capable of supplying hydraulic oil discharged from the work-related hydraulic pump to the second work device,
wherein the hydraulic oil circuit includes a surplus oil passage that leades, to the work-related supply route, hydraulic oil that is made surplus relative to an amount of the hydraulic oil supplied to the second work device, of the hydraulic oil discharged from the work-related hydraulic pump, and
the surplus oil passage is connected to the work-related supply route at a position downstream of the switching valve in a flow direction of hydraulic oil.

6. The hydraulic work vehicle according to claim 1,
wherein the hydraulic driving member is a work-related hydraulic motor for driving the first work device,
the hydraulic driving member switching unit is a work-related braking device that is attached to the work-related hydraulic motor and capable of applying a brake to the work-related hydraulic motor, and
the control unit causes the work-related braking device to apply a brake to the work-related hydraulic motor when the hydraulic work vehicle is in a traveling state and causes the work-related braking device to release the brake applied to the work-related hydraulic motor when the first work device is driven.

7. The hydraulic work vehicle according to claim 1,
wherein the hydraulic driving member is a variable displacement-type work-related hydraulic motor for driving the first work device,
the hydraulic driving member switching unit is a work-related motor capacity regulating unit that is provided to the work-related hydraulic motor and capable of regulating capacity of the work-related hydraulic motor, and
the control unit causes the work-related motor capacity regulating unit to set the capacity of the work-related hydraulic motor to 0 when the hydraulic work vehicle is in a traveling state and causes the work-related motor capacity regulating unit to set the capacity of the work-related hydraulic motor to be a specific capacity that is greater than 0 when the first work device is driven.

8. The hydraulic work vehicle according to any one of claims 1 to 7,
wherein the wheel drive unit includes a travel-related hydraulic motor that is connected to the closed circuit and generates driving force for rotating the wheel as a result of being supplied with hydraulic oil through the closed circuit,
the wheel drive unit switching unit is a travel-related braking device that is capable of applying a brake to the travel-related hydraulic motor, and
the control unit causes the travel-related braking device to apply a brake to the travel-related hydraulic motor when the first work device is driven and causes the travel-related braking device to release the brake applied to the travel-related hydraulic motor when the hydraulic work vehicle is in a traveling state.

9. The hydraulic work vehicle according to any one of claims 1 to 7,
wherein the wheel drive unit includes a variable displacement-type travel-related hydraulic motor that is connected to the closed circuit and generates driving force for rotating the wheel as a result of being supplied with hydraulic oil through the closed circuit,
the wheel drive unit switching unit is a travel-related motor capacity regulating unit that is provided to the travel-related hydraulic motor and capable of regulating capacity of the travel-related hydraulic motor, and
the control unit causes the travel-related motor capacity regulating unit to set the capacity of the travel-related hydraulic motor to 0 when the first work device is driven and causes the travel-related motor capacity regulating unit to set the capacity of the travel-related hydraulic motor to a specific capacity that is greater than 0 when the hydraulic work vehicle is in a traveling state.

10. The hydraulic work vehicle according to any one of claims 1 to 9, further comprising:
an operating device that is operated by an operator for designating an operation of the first work device,
wherein the hydraulic pump is a variable displacement-type, and
when the hydraulic work vehicle is in a traveling state, the control unit performs first capacity control of controlling capacity of the hydraulic pump so that power required for driving the hydraulic pump does not exceed an output of the engine, and when the first work device is driven, the control unit selects and performs the first capacity control or second capacity control of increasing or decreasing the capacity of the hydraulic pump according to increase or decrease of a manipulated variable of the operating device operated by the operator, whichever results in a lower discharge pressure of the hydraulic pump.

11. The hydraulic work vehicle according to any one of claims 1 to 10, further comprising:
a charge circuit that is capable of introducing hydraulic oil to the closed circuit at a predetermined setting pressure,
wherein the work device drive circuit includes a work-related return oil passage that is capable of introducing return oil from the hydraulic driving member to the charge circuit, and a back pressure generating device that is provided to the work-related return oil passage and generates a back pressure that is greater than the predetermined setting pressure in return oil flowing through the work-related return oil passage.

12. The hydraulic work vehicle according to claim 11,
wherein that the charge circuit includes a charge pump that is driven by the engine and discharges hydraulic oil, a charge oil passage that connects a discharge opening of the charge pump and the closed circuit, and a filter that is provided to the charge oil passage and used for filtering hydraulic oil flowing through the charge oil passage, and
the work-related return oil passage is connected to a part between the charge pump and the filter, of the charge oil passage.
